# EUROPEAN PATENT SPECIFICATION

(11) **EP 2 919 067 B1**
(45) Date of publication and mention of the grant of the patent: **18.10.2017**
(21) Application number: 14159041.4
(22) Date of filing: 12.03.2014
(51) Int. Cl.: G03B 13/10, G03B 35/08, H04N 13/02

(54) **Multi-planar camera apparatus**
Multiplanare Kameravorrichtung
Appareil à caméra multi planaire

(43) Date of publication of application: 16.09.2015
(73) Proprietor: Mirlay, Ram Srikanth, Bangalore 560 080, Karnataka (IN)
(72) Inventor: Mirlay, Ram Srikanth, Bangalore 560 080, Karnataka (IN)
(74) Representative: Papa, Elisabetta

(56) References cited:
- EP-A2- 0 644 701
- EP-A2- 1 085 769
- WO-A1-2012/165123
- CN-U- 202 600 337
- CN-Y- 201 298 141
- JP-A- 2002 125 246
- JP-A- 2011 112 808
- JP-A- 2011 239 207
- US-A- 5 978 015
- US-A1- 2010 194 860
- US-A1- 2011 261 167

## Description

### Field of Invention

The present invention relates to a camera apparatus, particularly to a multi-planar camera apparatus with image capturing members, to render three-dimensional (3-D) spatial images of a target subject, at various depth angles and in multiple planes. The present invention also relates to a multi-camera apparatus having a wider field of view to capture 2-D panoramic images of a target subject(s).

### Description of related art

Stereoscopic photography in a known way creates a 3-D illusion starting from a pair of 2-D images. The easiest way to enhance depth perception in the brain is to provide the eyes of the viewer with two different images, representing two perspectives of the same object, with a certain deviation approximately equal to the perspectives that both eyes naturally receive in binocular vision.

Stereo lenses which could turn an ordinary film camera into a stereo camera by using a special double lens to take two images and direct them through a single lens to capture them side-by-side on the film are known in the art. Two cameras are mounted on a bracket, spaced apart a bit, with a mechanism wherein pictures can be taken at the same time. The precise methods for camera control have also allowed the development of multi-rig stereoscopic cameras where different slices of scene depth are captured using different inter-axial settings. The images of the slices are then composed together to form the final stereoscopic image pair. This allows important regions of a scene to be given better stereoscopic representation while less important regions are assigned less of the depth budget.

There have been cameras having dual camera system which work on a parallax phenomenon. The detector heads or optical axes of such cameras remain parallel and never converge. There is a fixed lateral separation of the two cameras and their visual input sources. Hence, the target goes out of the field of vision of one of the cameras. In other cameras, the axes of the two cameras are diverging and generally they deal with creating a 3-D virtual reality environment and models, not a 3-D vision or view.

Moreover in some dual camera systems, the two cameras are so fixed and so held together that the inter-camera distance remains fixed. So the whole camera system has to be adjusted for taking images from different angles. Also, these camera systems have single eyepiece/objective, which affects their functionality.

Computing and Communication devices such as laptops, PDAs, i-phones, i-pads, tablets etc., are provided with photographic cameras to capture images. However, the cameras of these devices have limitations in dynamic rendering 3-D images of a target object, without resorting to tools such as image processing software to process the spatially-separated visual data. These cameras also have limitations in providing an enhanced 3-D perception of target-objects from different vantage spatial positions. Their optic axes are non-convergent, have a fixed inter camera separation distance. In addition, the choice of providing panoramic views of target-objects, from different vantage positions, is not available for such photographic and computing devices.

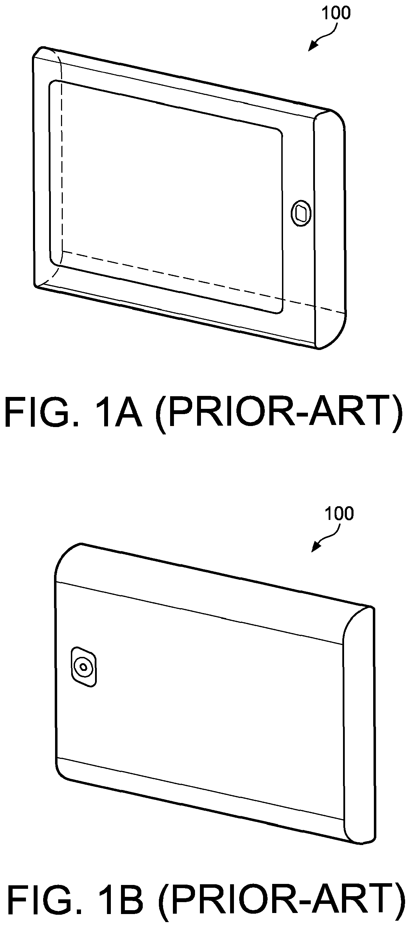

Computing and communication devices such as tablets and smart phones are normally equipped with front and/or rear image capturing devices, such as cameras, to take photographic and video pictures, in 2-D mode, as shown in **FIG.1A** and **FIG.1B****.** Digital cameras that are normally used in conjunction with such devices, to shoot and capture images, are provided with digital sensor chip/film, a lens, a view finder/LCD screen, a shutter, a flash, a memory card, an autofocus mechanism, timer mechanism, an image stabilization mechanism, a battery storage zone, lens rings, controls for memory, light sensors, Charge Couple Device (CCD), Complementary Metal Oxide Semiconductor (CMOS), a speaker, a power switch, a flash one/two, a PC/AV terminal, a tripod socket, a buttons or controls for power, a zoom, a shutter release, a menu for selection of items etc.

A variable 3-D camera is disclosed in a co-pending PCT International Application (PCT/IN2011/000145) of the present applicant with dual-camera assemblies, in which the optics of the cameras are adjustable and moved synchronously to each other to provide a 3-D view of the objects. However, in this arrangement, the left and right pathways of a target-object are permitted to pass through two different converging optical devices, before they are displayed on two different display devices such as LCDs and/or viewed through left and right eye pieces. The de-association of left and right images on two different LCDs would make the simultaneous image viewing cumbersome, as the natural vision of a user converges on either one image, at a given time. Variable 3-D camera of this Application handles capturing of 3-D images only in the plane of its arms because the cameras are not situated in arms but fixed to the body. It can capture only front pictures. Further, the camera of this type is vulnerable to tilt while capturing images at oblique angles. The arrangement as disclosed also has a limitation of 3-D triangle of invisibility, which is an area in front of the body of the camera, which cannot be focused on by the converging optical devices.

A variable 3-D microscope is disclosed in PCT/IN2011/000141 in a co-pending patent application of the present Applicant, in which a 3-D microscope with arms is disclosed. However, the 3-D microscope is an image viewing device with a magnification, to render a 3-D view of an object to a user' eyes. The area of 3-D vision is in the front of objectives and centered on the plane of the arms since the optics including the objectives are fixed within the plane of the arms. Tilting of the arms away from the plane of the arms is not available in this arrangement.

A 3-D adaptor assembly for a 2-D camera is disclosed in a co-pending Indian PCT Application No. PCT/IN2013/000429, where an adaptor with arms is used to connect to a 2-D camera and convert the 2-D camera into a 3-D camera for capturing 3-D images of a target-object at various vantage positions. Even though the plane of 3-D viewing can be in any one of the planes in the 360 degrees in front of the camera, this arrangement may result in a tilt and an oblique view of the target object. The adaptor is limited to photography only in the plane of its tilting or tilted arms. However, the arms and the optics are not arranged to move above or below or away from the plane of its arms.

Therefore, these known photographic devices can capture a 3-D picture only in the plane of their camera arms, which may be may be horizontal, vertical or oblique. However, these devices are not equipped to "look up" or "look down" without skirting or changing the orientation of the main body of the device.

GB308839 discloses a cinematograph camera with two angularly movable telescopic tubular arms having objectives, wherein the tubular arms are arranged one above the other in a vertical plane, at distance equal to the height of one motion picture, to pick up the motion pictures alternately. In this arrangement the arms having vertical displacement are fixed on single plane. In such a camera arrangement, the left and right planes of the images are not similar, due to the vertical displacement of the left and right tubular arms, thereby not being able to capture 3-D pictures. In addition, in the absence of elbows for the arms there is a limitation on the focusing range, even if both arms were in the same plane. Further 3-D cameras are known from EP0644701 A and CN202600337U.

A conventional camera assembly for a typical computing and communication device such as smartphone or phablet is configured in the following manner as shown in **FIG.1**

As shown in **FIG.1****,** a camera assembly for computing and communication device 100 includes a housing within which functional components of the device are arranged. A front cover with a display unit is arranged on the exterior surface of the housing to facilitate viewing and other user functions such as multi-touch gestures. The front cover of the device is also equipped with other controls that are required to be operated by the user for its operations. A back cover is mounted on the back portion of the device and is provided with a camera for capturing images.

However - as already mentioned above - conventional computing and communication devices are not provided with a function of capturing variable 3-dimensional and panoramic views of target objects having an enhanced depth perception.

Therefore, there is a need to provide a multi-planar camera apparatus, with a greater degree of freedom in rendering three-dimensional (3-D) spatial images of a target subject at multiple planes and with an enhanced depth angle, without having a need to retain the body of the camera in a horizontal position. It is also preferred to provide a multi-camera apparatus having a wider field of view, to capture panoramic images of a target subject(s).

### Objects of the present invention

The primary object of the present invention is to provide a multi-planar camera apparatus with image capturing members, to render three-dimensional (3-D) spatial images of a target subject at various depth angles and in multiple planes, without tilting the body of the camera apparatus.

An object of the present invention is to provide a multi-planar camera apparatus with a wider field of view to capture panoramic images of a target subject(s), without turning or moving the body of the camera apparatus.

Another object of the present invention is to provide a multi-planar camera apparatus with movable image capturing members that can render 3-D spatial images of a target-subject, with a range of depth perception.

Yet another object of the present invention is to provide a multi-planar camera apparatus with a pair of adjustable left and right eye piece complexes having image viewing screens, to render a direct 3-D views of a target-subject, as captured by the movable image capturing members.

Still another object of the present invention is to provide a multi-planar camera apparatus that can render 3-D spatial images of a target-subject that is located both in front and at the back (selfie mode) of the apparatus without turning or tilting the apparatus.

Further object of the present invention is to provide a multi-planar camera apparatus that can render 3-D spatial images of a target-subject, in which the image capturing members are arranged to orient and cyclorotate in horizontal and vertical planes.

The term "cyclorotate" or "cyclorotation" denotes a rotation of a camera around its anteroposterior (front-back) axis. As an analogy, the cycloration of the camera can be compared to rotation of the hands of a clock both in clockwise and counter clockwise directions. In a clock, the 12 o'clock marking, is at the top and whereas the 6 o'clock marking is at the bottom. Similarly, the 9 o'clock marking is at the extreme left of the clock and the 3 o'clock marking is at the extreme right. This can be considered as reference starting positions for understanding and measuring cyclorotation of a camera. Accordingly, an imaginary line joining the 12 o'clock to the 6 o'clock mark, is a vertical line and an imaginary line joining the 3 o'clock mark to the 9 o'clock mark, is a horizontal line. This horizontal line can also be termed as a line that is parallel to earth's horizon. Accordingly, for instance, considering the camera as the clock, the camera rotates around its front-back axis, such that it's 12 o'clock mark moves to the position of 1 o'clock, which rotation is termed as clock-wise cyclorotation. Similarly, when the camera rotates around its front-back axis, such that it's 12 o'clock mark now moves to the position of the 11 o'clock mark, then it is termed as counter-clockwise cyclorotation. In this cyclorotation, the 12 o'clock to 6 o'clock meridian line (vertical line) is tilted to the vertical meridian at a certain angle and this angle of cyclorotation is measured in degrees, in clockwise or counter clockwise rotations.

Still another object of the present invention is to provide a multi-planar camera apparatus that can render 3-D spatial images of a target-subject, in which the image capturing members are arranged to move laterally and bi-directionally.

Yet another object of the present invention is to provide a multi-planar camera apparatus, with 3-D video image capturing capability, at multiple levels and depth angles.

It is also an object of the present invention to provide a multi-planar camera apparatus that can obliterate the triangle of 3-D invisibility that forms between the image capturing members.

### Summary of the present invention

Accordingly, the present invention provides a multi-planar camera apparatus in which movable image capturing members that are connected to lateral space variators are arranged to move laterally, horizontally and vertically in multiple planes and to cyclorotate, while capturing 3-D spatial images of the target-subject with enhanced depth angle. The multi-planar camera apparatus is also provided with eye piece complexes and a display unit to view the captured 3-D images directly through human eyes or through polaraised 3-D glasses. The multi-planar camera apparatus of the present invention is provided with a wider field of view to capture panoramic images of target-subjects. Further, the multi-planar camera of the present invention is equipped to capture 3-D spatial images of the target-subject without tilting or turning the body of the camera apparatus. Furthermore, the multi-planar camera apparatus of the present invention obliterates 3-D triangle of invisibility that forms between the image capturing members.

### Brief description of the drawings

**FIG.1A & 1B** is an illustration of front and back portions of a known computing and cellular device, with a camera mounted on the back portion.
**FIG.2a** is an exemplary perspective view of a multi-planar camera apparatus according to an embodiment of the present invention, for rendering 3-D images of a target-subject, with a pair of image capturing members shown in resting positions.
**FIG.2b** and **2c** are expanded perspective views of image capturing members of a multi-planar camera apparatus according to an embodiment of the present invention that are configured to orient in horizontal and vertical planes and cyclorotate
**FIG.2d** is an exemplary perspective view of movable connectivity between an optics housing member and a vertical stem of the image capturing member.
**FIG.2e** is an exemplary perspective view of a multi-planar camera apparatus according to an embodiment of the present invention for rendering 3-D images of a target-subject, with plurality of image capturing members shown in resting positions.
**FIG.3** is an exemplary perspective view of a multi-planar camera apparatus according to an embodiment of the present invention for rendering 3-D images of a target-subject, with lateral space variators in the form of gear arrangement.
**FIG.4** is an exemplary perspective view of a multi-planar camera apparatus according to an embodiment of the present invention for rendering 3-D images of a target-subject, with lateral space variators in the form of rotating disc arrangement.
**FIG.5** is an exemplary perspective view of a multi-planar camera apparatus according to an embodiment of the present invention for rendering 3-D and panoramic images of a target-subject, with lateral space variators in the form of a cylinder-piston arrangement.
**FIG.6** is an exemplary perspective view of a multi-planar camera apparatus according to an embodiment of the present invention for rendering 3-D images of a target-subject, with lateral space variators in the form of a moving magnet arrangement.
**FIG.7** is an exemplary perspective view of a multi-planar camera apparatus according to an embodiment of the present invention for rendering 3-D and panoramic images of a target-subject, with lateral space variators in the form of a screw and thread arrangement.
**FIG.7a** is a perspective view of exemplary screw and thread lateral space variators of the embodiment of **Fig.7** and **FIG.7b** is an exemplary electrical circuit for actuating the screw and thread lateral space variators.
**FIG.8** is an exemplary perspective view of a multi-planar camera apparatus according to an embodiment of the present invention for rendering 3-D images of a target-subject, with lateral space variators and image capturing members provided as an adaptor arrangement.
**FIG.9** is an exemplary perspective view of a multi-planar camera apparatus according to an embodiment of the present invention for rendering panoramic images of a target-subject(s).
**FIG.10** is an exemplary perspective view of a multi-planar camera apparatus according to an embodiment of the present invention for rendering 3-D images of a target-subject, with a plurality of lateral space variators.
**FIG.11** is an exemplary perspective view of a multi-planar camera apparatus according to an embodiment of the present invention for rendering three-dimensional (3-D) video images of a target-subject, at various vertical levels.
**FIG.12a** is a schematic representation of a multi-planar camera apparatus according to an embodiment of the present invention, depicting the positional arrangement of the image capturing members while the housing of the camera apparatus is horizontal to horizon "H-H"'.
**FIG.12b** is a schematic representation of a multi-planar camera apparatus according to an embodiment of the present invention, depicting the tilted positional arrangement of the image capturing members before undergoing cyclorotation, while the housing of the camera apparatus is tilted at an angle "θ "to horizon "H-H"'.
**FIG.12c** is a schematic representation of a multi-planar camera apparatus according to an embodiment of the present invention depicting the positional arrangement of the image capturing members after undergoing cycloration while the housing of the camera apparatus is still tilted at an angle "θ" to horizon "H-H"'.
**FIG.12d** is a schematic representation of a multi-planar camera apparatus according to an embodiment of the present invention depicting the positional arrangement of the image capturing members with vertical displacement compensation of left and right image capturing members, while the housing of the camera apparatus is tilted at an angle "θ" to horizon "H-H'".
**FIG.13** a perspective view of a multi-planar camera apparatus according to an embodiment of the present invention for 3-D images of a target-subject, depicting the obliteration of triangle of 3-D invisibility.
**FIG.14** is a perspective view of a multi-planar camera apparatus according to an embodiment of the present invention depicting variation of depth angles of the target-subject.

### Description of the invention

Depth perception or 3-D vision (length, breadth and depth) of a target-subject is a type of visual experience of a target-subject that normal human/mammals experience with a pair of eyes that are separated by a fixed Inter-Pupillary Distance (IPD). However, those with only one-eye vision can only see the length and breadth of the target-subject but not its depth. Accordingly, when a human being looks at a nearby target-subject, the right and left eyes simultaneously focus, fix or converge on the target-subject, within the limits of the IPD, thereby generating different left and right images, with natural disparity, of the target-subject. These different left and right images of the target-subject are interpreted as 3-dimensional or depth perception by the mechanism of the human brain.

Similarly, in a 3-D camera, having right and left cameras, the right camera focuses on a target-subject from the right-view perspective and the corresponding left camera focuses on the target-subject from the left-view perspective of the same target-subject. Therefore, the resultant captured images will have difference or disparity in left and right perceptions of the target-subject, resulting in overlapped or blurred images. The overlapped images are viewed by users, either on the display unit of the camera or through a projection of images on a screen. These images are normally viewed through polarized 3-D goggles.

The distance between left and right cameras i.e. the Inter-Camera Distance (ICD), impacts the 3-D effect or depth perception of the target-subject. In other words, an increase in the ICD provides an enhanced depth perception of the target-subject, whereas a decrease in the ICD results in decreased depth perception.

In order to capture 3-D images of a target-subject, located at closer and farther distances, a 3-D photographic device is required not only to diverge and converge the left and right cameras, respectively, at various angles, for closer and distant visions but also to vary the ICD to achieve the desired depth angle.

Therefore, lateral variation of the ICD, by displacing left and right cameras of a 3-D photographic device, helps a user to perceive a greater depth angle (DA) or 3-D Effect Angle (3-DA) of a given target-subject. The term "Depth Angle (DA)" or"3-D Effect Angle (3-DA)" normally refers to an angle that is subtended by the optical axis of the right image capturing member with the optical axis of the left image capturing member, at a target-subject. Accordingly, in a 3-D camera, for a given distance of a target-subject from the camera, the ICD is proportional to the DA. In other words, greater the ICD, the greater will be the DA and *vice-versa.* Similarly, in the event of decrease in the distance between the camera and the target-subject, the DA also becomes proportionally smaller.

In the multi-planar camera apparatus of the present invention, the Inter-Camera Distance (ICD) is dynamically varied, by laterally separating left and right movable image capturing members, while focusing or converging on the target-subject. The lateral displacement of the movable image capturing members enhances the Depth Angle (DA), or 3-D Effect Angle (3-DA), of the target-subject. Furthermore, the camera apparatus of the present invention is configured to cyclorotate in horizontal and vertical planes, to capture 3-D images of the target-subject, in multiple planes.

Accordingly, the present invention provides a multi-planar camera apparatus to capture and render 3-D left and right images of a target-subject, at alterable 3-D angles and ICD. The camera apparatus of the present invention can also be used in conjunction with digital cameras, computing and communication devices such as a tablet, phablet, and smart phone or the like.

The preferred embodiments of the invention are advantageously implemented in hardware, firmware, software, or any combination thereof, of the apparatus of the present invention. Embodiments of the invention may also be implemented as instructions stored on a machine-readable medium, which may be read and executed by one or more processors. A machine-readable storage medium may include any mechanism for storing or transmitting information in a form readable by a machine (e.g., a computing device). For example, a machine-readable storage medium may include read only memory (ROM); random access memory (RAM); magnetic disk storage media; optical storage media; flash memory devices; electrical, optical forms of signals. Further, firmware, software, routines, and instructions may be described herein as performing certain actions. Data and instruction communication channels that are used in the apparatus of the present invention can be any one or a combination of standard wireless technologies Bluetooth and Wi-Fi etc.

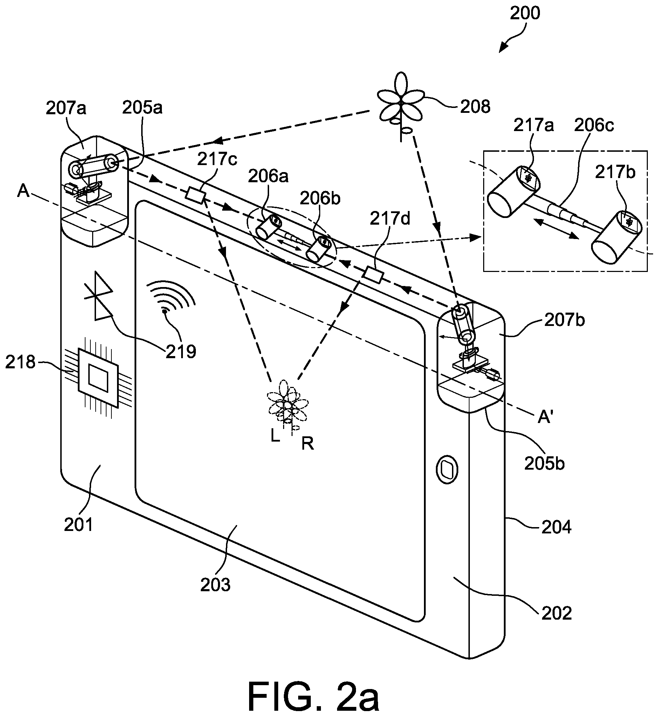

The preferred embodiments of the invention will be described with reference to the accompanying drawings. **FIG.2a** depicts an embodiment of the present invention, where the multi-planar camera apparatus with image capturing members, to render three-dimensional (3-D) spatial images of a target subject, at various depth angles and in multiple planes, is exemplarily shown incorporated in a smart phone or a phablet and this shall not be construed as a limiting factor.

A computing and communication device **200** as considered for the present invention, normally includes, among other things, an arrangement of the components such as a digital sensor chip/film, a lens, a view finder/LCD screen, a shutter, a flash, a memory card, an autofocus mechanism, an image stabilization mechanism, a battery storage zone, lens rings, controls for memory, light, object and direction sensors, transducers, Charge Couple Device (CCD), Complementary Metal Oxide Semiconductor(CMOS), colour-array filters, a speaker, a power switch, a flash one/two, a PC/AV terminal, a tripod socket, a buttons or controls for power, a zoom, a shutter release, a menu for selection of items and a digital processor.

As shown in **FIG.2a****,** a housing **201** of the computing and communication device **200,** which is a hollow fixed member, in which functional components of the device **200** are incorporated. A front panel **202** is arranged on the exterior surface of the housing **201.** The housing **201** incorporates at least an electronic display unit **203,** such as a touch screen or a CCD, which is arranged on the front panel **202,** through means of which, a user can view texts, images, icons etc., and control the operations or functions of the device **200** through simple or multi-touch gestures by touching or contacting the electronic display unit **203** with one or more fingers or pointers such as stylus. The front panel **202** of the device **200** is also equipped with other controls or switches that are required to be operated by the user for its operations. The housing **201** in this exemplary aspect is shown as having rectangular shape. However, it is to be understood that the housing **201** can be formed in other different shapes and configurations that are not limited to square, curved etc. A back panel cover **204** is mounted on the back portion of the device **200** and is connected to the front panel **202.**

In an aspect of the present invention, a pair of camera-receptacles **205a** and **205b** is formed, integrally, in the housing **201** of the device **200.** These camera-receptacles **205a** and **205b** are carved as hollow cavities, advantageously, at the upper terminal or lateral ends of the housing **201** and in the area between the front panel **203** and the back cover **204,** as shown in **FIG.2a****.** These pair of camera-receptacles **205a** and **205b,** serve as anchor points or parking slots for left and right image capturing members **207a** and **207b** while they are in resting position. The shape and configuration of the camera-receptacles **205a** and **205b** is exemplarily shown as rectangular hollow cavities. The shape and configuration of the receptacles **205a** and **205b** can also be circular, oval, square or any other shapes, so long as they merge and align with the design and geometrical configuration of the housing **201** of the device **200.** The camera-receptacles **205a** and **205b** are set apart along a horizontal axis *A-A'* of the housing **201,** with an interspatial distance between them. The camera-receptacles **205a** and **205b** are arranged along the axis *A-A',* as shown in **FIG.2a****.** The camera-receptacles **205a** and **205b** are optionally provided as enclosures with transparent outer coverings.

The camera-receptacles **205a** and **205b** are preferably formed at the terminal ends of the housing **201** and exemplarily shown as cubicles. However, it is understood here these camera-receptacles can be arranged at any preferred choice of location inside the housing **201,** along the axis *A-A'* and can be provided in any other desired shapes and variable inner dimensions and sizes.

In further aspect of the present invention, as shown in **FIG.2a****,** a pair of movable image capturing members **207a** and **207b** (left and right movable image capturing members) are arranged in the camera-receptacles **205a** and **205b** respectively, along the axis A-A', with an intervening distance between. The movable image capturing members **207a** and **207b** are provided with suitable driving mechanism, as hereinafter described, to orient, move and cyclorotate in horizontal and vertical planes of the housing **201,** to capture 3-D spatial images of the target-subject **208.**

In yet another aspect of the present invention, as shown in **FIG.2a****,** a pair of adjustable eye piece complexes (left and right eye piece complexes) **206a** and **206b** is arranged advantageously on the top portion of the housing **201.** The eye piece complexes **206a** and **206b** are also equipped with internal image-viewing screens **217a** and **217b,** advantageously LCD screens, to display 3-D views of a target-subject **208.** The eye piece complexes **206a** and **206b** are Digital Single-Lens Reflex (DSLR) cameras that are provided with suitable magnification lenses, image sensors, a sun mask and an eye cup to prevent external light penetration. The eye piece complexes **206a** and **206b** are optically connected, to the left and right image capturing members **207a** and **207b** through electronic beam splitters **217c** and **217d,** so that the eye piece complexes **206a** and **206b** receive the light pathways of the target-subject **208** as captured by and relayed from the left and right movable image capturing members **207a** and **207b.** The captured and relayed images of the target-subject **208** are displayed on image-viewing screens **217a** and **217b,** which are advantageously LCDs, of the eye piece complexes **206a** and **206b,** to be viewed directly through the left and right eyes of the user. The beam splitters **217c** and **217d** are incorporated to switch the optical pathways of the target-subject **208** between the image viewing screens **217a** and **217b** of the eye piece complexes **206a** and **206b** and the display unit **203.** The eye piece complexes **206a** and **206b** are provided with inter-distance variators **206c** to adjust the inter-objective distance between them so as to align with the interpupillary distance of eyes of a user, while viewing and focusing on the target-subject **208,** through the image capturing members **207a** and **207b.** The eye piece complexes **206a** and **206b** can be suitably adapted with suitable optics, to view the target-subject **208,** either in front or back of the device **200.** Therefore, by using this arrangement, a user can view 3-D spatial images of the target-subject directly on the image-viewing screens **217a** and **217b,** in multiple planes and without polarized 3-D optics, since in this embodiment the target-subject **208** is viewed through the movable image capturing members **207a** and **207b,** which are stationed in the camera-receptacles **205a** and **205b.** In other words, the user experiences stereopsis through the image-viewing screens **217a** and **217b.** Therefore, by adopting the arrangement as shown **FIG.2a****,** a pair of movable image capturing members **207a** and **207b** is used in one location i.e., in the upper terminal ends of the housing **201** and along the horizontal axis *A-A'.*

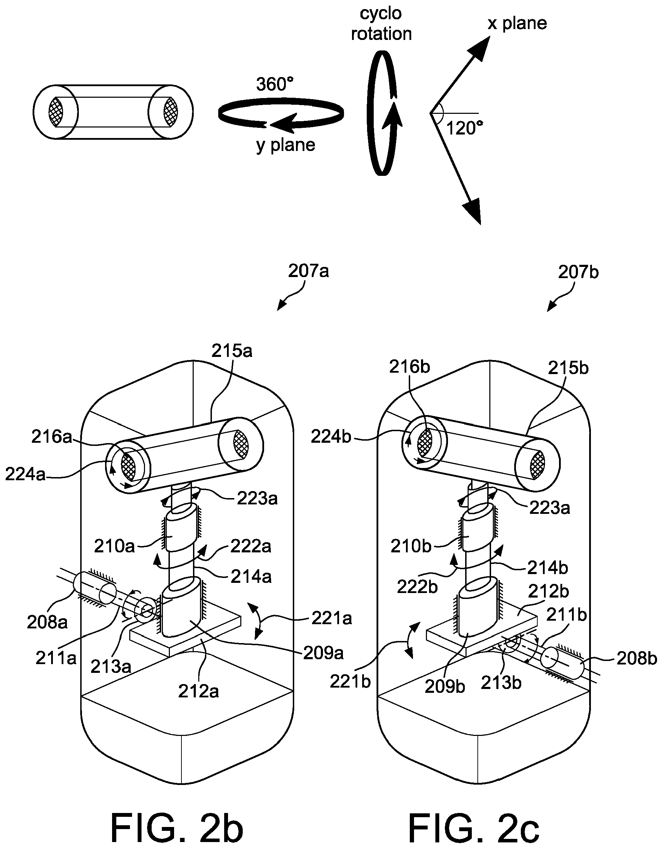

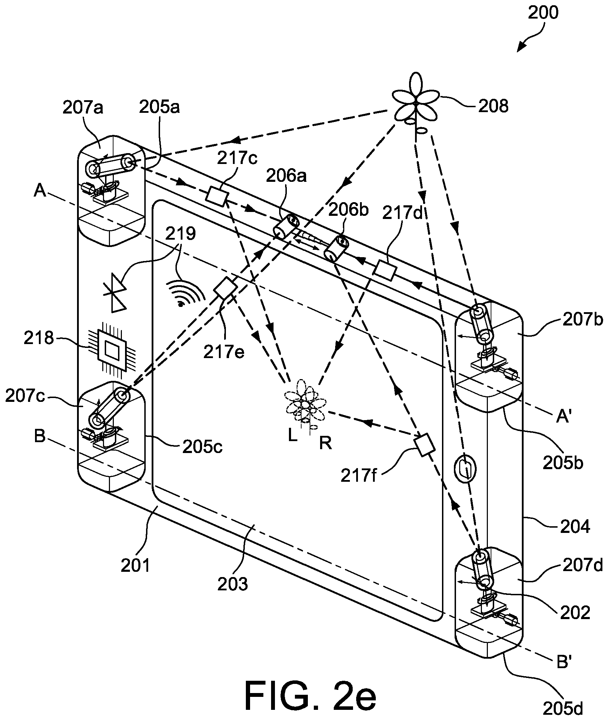

In another aspect of the present invention, as shown in **FIG.2e****,** at least two pairs of camera-receptacles **205a, 205b** and **205c** and **205d** are formed, integrally, in the housing **201** of the device **200.** These camera-receptacles **205a, 205b** and **205c** and **205d** are carved as hollow cavities, advantageously, at the upper and lower terminal or lateral ends of the housing **201** and in the area between the front panel **203** and the back cover **204,** as shown in **FIG.2e****.** These camera-receptacles **205a, 205b, 205c** and **205d,** serve as anchor points or parking slots for movable image capturing members **207a, 207b, 207c** and **207d** respectively, while they are in resting positions. The shape and configuration of the camera-receptacles **205a, 205b, 205c** and **205d** is exemplarily shown as rectangular hollow cavities and the shapes can also be circular, oval, square or any other shapes, so long as they merge and align with the design and geometrical configuration of the housing **201** of the device **200.** The camera-receptacles **205a, 205b, 205c** and **205d** are set apart along horizontal axis *A-A'* and axis *B*-*B*' of the housing **201,** respectively, with an interspatial distance between them. The camera-receptacles **205a, 205b** and **205c** and **205d** are arranged along the axis *A-A',* and *B*-*B*' as shown in **FIG.2c****.** The camera-receptacles **205a, 205b, 205c** and **205d** are optionally provided as enclosures with transparent outer coverings.

The camera-receptacles **205a, 205b, 205c** and **205d** are preferably formed at the terminal ends of the housing **201** and exemplarily shown as cubicles. However, it is understood here these camera-receptacles can be arranged at any preferred choice of location inside the housing **201,** along the axes *A-A'* and *B*-*B*' and can be provided in any other desired shapes and variable inner dimensions and sizes.

In further aspect of the present invention, as shown in **FIG.2e****,** movable image capturing members **207a, 207b, 207c** and **207d** (left and right movable image capturing members) are arranged in the camera-receptacles **205a, 205b, 205c** and **205d** respectively, along the axes *A-A'* and *B*-*B*' respectively with an intervening distance between the movable image capturing members **207a, 207b, 207c** and **207d.** The movable image capturing members **207a, 207b, 207c** and **207d** are provided with suitable driving mechanism, to orient and cyclorotate in horizontal and vertical planes of the housing **201,** to capture 3-D spatial images of the target-subject **208.** The movable image capturing members cyclorotate in clockwise or counter clockwise directions, if the housing of the camera apparatus is tilted away from the horizon.

In the embodiment as shown in **FIG.2e****,** in addition to the provisioning of horizontal separation between the movable image capturing members, a vertical separation is also provided, by incorporating movable image capturing members along the axes *A-A'* and *B-B',* respectively.

In yet another aspect of the present invention, as shown in **FIG.2e****,** the pair of adjustable eye piece complexes (left and right eye piece complexes) **206a** and **206b** are also optically connected, to the left and right image capturing members **207a, 207b, 207c** and **207d** through electronic signal splitters **217c** and **217d,** so that the eye piece complexes **206a** and **206b** receive the light pathways of the target-subject **208** as captured by and relayed from the left and right movable image capturing members **207a, 207b, 207c** and **207d.** The captured and relayed images of the target-subject **208** are displayed on the image-viewing screens **217a** and **217b.** The beam splitters **217c** and **217d** are incorporated to switch the optical pathways of the target-subject **208** between the image viewing screens **217a** and **217b** of the eye piece complexes **206a** and **206b** and the display unit **203.** Therefore, by using this arrangement, the user can view 3-D spatial images of the target-subject directly on the image-viewing screens **217a** and **217b,** in multiple planes and without polarized 3-D optics, since in this embodiment the target-subject **208** is viewed through the movable image capturing members **207a, 207b, 207c** and **207d,** which are stationed in the camera-receptacles **205a, 205b** and **205c, 205d** respectively. Alternately, the captured images can also viewed on the display unit **203** through polarized 3-D glasses.

In yet another aspect of the present invention, a suitable electronic switching or toggle mechanism is provided in the camera apparatus **200,** to enable the user to switch between the views of the target-subject **208,** as rendered by the individual pair of movable image capturing members **207a, 207b** and **207c, 207d,** respectively. In other words, the user can independently select the desired individual pair of movable image capturing members, to capture the 3-D images of the target-subject **208.**

In further aspect of the present invention, the constructional features of the movable image capturing members are now described by referring to **FIG.2b** and **FIG.2c** of the accompanied drawings. The movable image capturing members **207a** is provided in the form of cubicles with transparent peripheral walls, preferably with an open upper portion to facilitate the vertical movements of the image capturing members The peripheral walls are made of glass, preferably a High Definition glass with desirable refractive index, so as to minimize the deviation of the light rays that traverse through its external surfaces. The peripheral walls are also preferably coated with water and oil repellent, scratch and stain resistant coatings. Other suitable materials such as transparent ceramic and polymeric materials can also be used for the peripheral walls. Transparent peripheral walls also protect the inner components of the movable image capturing member **207a** from external factors. The peripheral walls protect movable image capturing member **207a** from expensive front element damage, which could be caused by dirt, knocks or scratches.

The movable image capturing member **207a** (left image capturing member) includes, advantageously, a plurality of driving members, which are preferably micro motors, to actuate various multi-directional and multi-planar movements of the image capturing member **207a,** as hereinafter described. The driving members of the movable image capturing member **207a** form transverse actuator assemblies and include a pitch-drive member **208a,** a yaw-drive member **209a** and a roll-driver member **210a** that are connected to each other in cooperative and reciprocal manner.

The pitch-drive member **208a** is advantageously a pitch motor, which is fixed to one of the inner surfaces of the camera-receptacle **205a.** A movable pitch shaft **211a** with its one end connected to the pitch-drive member **208a** and the other end connected to a movable pedestal **212a** through a joint or a coupler **213a.** The movable pedestal **212a** acts as a platform for mounting various components of the movable image capturing member **207a.** The pitch-drive member **208a** imparts pitch movements (up and down vertical movements) to the pedestal **212a,** along the plane of the pedestal **212a.** In other words, the pedestal **212a,** once actuated, by the pitch drive member **208a,** move vertically, in the direction above and below the plane of the pedestal **212a,** along the indicated directional arrows of **221a.**

The yaw-drive member **209a** is mounted on the pedestal **212a** and is positioned substantially perpendicular to the axis of movement of the pitch-drive member **208a.** The yaw-drive member **209a** is a yaw micro motor that renders yaw movement or rotation as indicated by directional arrows **222a,** to the movable image capturing member **207a** through a movable and rotatable vertical stem **214a,** with its one end vertically coupled to the yaw-drive member **209a.** The movable stem **214a** is equipped to move independently to carry the pitch and yaw drives as transmitted from the movable pedestal **212a.** The rotatable and movable stem **214a** can also be made as a height-adjustable single unit or with multiple telescoping units to provide an adjustable vertical height. The movable stem **214a** is also disposed to rotate both in clock and counter-clock directions along its vertical axis. The distal end of the movable stem **214a** is connected to the roll-drive member **210a.**

The roll-drive member **210a** is a roll micro motor, which is connected to the movable image capturing member **207a.** The roll-drive member **210a** renders fine rolling movements or cyclorotational movements, as indicated by the directional arrows **224a,** to the image capturing member **207a.**

An optics housing **215a,** which is advantageously a hollow tubular structure, is movably connected to the movable stem **214a** through the roll-drive member **210a.** In other words, the movable stem **214a** acts a pivot for the optics housing **215a.** At least a lens assembly **216a** of compound photographic lenses with graticules is arranged at the distal ends of the optics housing **215a** to capture the images of target-subject **208** and relay the captured images for viewing through the display unit **203,** which is as CCD

(charged coupled device) through photo diodes or to the eye piece complexes **206a** and **206b.** Thus, the optics housing **215a** forms a multi-directional camera that can orient and cyclorotate in vertical and horizontal planes, to capture 3-D spatial images of the target-subject **208.** The lens assembly **216a** is advantageously configured to capture images of the target-subject **208** from both the distal ends of the optics housing **215a.** In other words, the lens assembly **216a** is equipped with multi-directional image capturing functionality. The lens assembly **216a** is also equipped to capture a high-definition video also. In another aspect of the present invention the movable image capturing member **207a** can also possess the features of a Digital Single-Lens Reflex Camera (DLSR). Plane polarized filters are also provided in the optics housing.

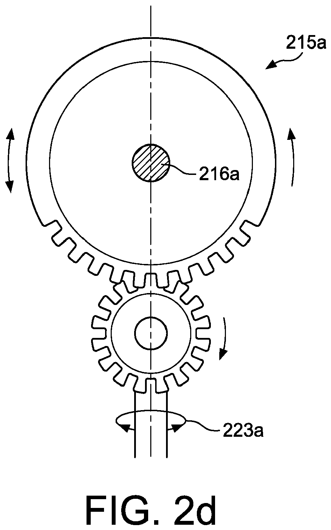

In another aspect of the present invention the movable vertical stem **214a,** which is arranged to move vertically is movably connected to the optics housing **215a,** as shown in **FIG.2d****.** In this aspect, a combination of rotary gear arrangement is shown, to transmit the rotary movement of the stem into the rotary movement of the optics housing **215a,** particularly cyclorotation of the lens assembly **216a** in both clockwise and counter-clockwise directions. It is to be understood here, the rotary gear arrangement is exemplarily shown to implement the cyclorotation of the lens assembly **216a.** Other suitable rotary arrangements such as pneumatic, magnetic or bellow coupling etc. can also be suitably adopted to implement the cyclorotation of the lens assembly **216a.**

By virtue of the aforementioned cumulative drive arrangement, the movable image capturing member **207a** is configured to orient in horizontal and vertical planes and cyclororate, as shown in **FIG.2b****.**

In yet another aspect of the present invention the movable image capturing member **207a** is configured to rotate at an angle of 0-360 degrees along the horizontal plane of the housing **201** and on the vertical plane at angle of about 120 degrees, to capture 3-D spatial images of the target-subject **208.**

In further aspect of the present invention, the movable image capturing member **207a** is positioned substantially at vertical meridian to the housing **201,** even when the housing is not parallel to horizon. In other words, the vertical meridian position of the image capturing member **207a** is maintained even if the housing **201** is parallel and non-parallel to the horizon, especially when the housing **201** of the camera apparatus **200** is tilted while focusing on the target-subject at various converging angles.

In yet another aspect of the present invention the movable image capturing members **207a, 207b, 207c** and **207d** are configured to cyclorotate in clockwise and counterclockwise directions. The cyclorotation is also performed by utilizing a horizon level indicator of the apparatus **200** and controlled by a digital processor **218.**

In further aspect of the present invention the movable image capturing members **207a, 207b, 207c** and **207d** are configured to capture images of the target-subject **208** both from the front and back sides of the apparatus without turning the device **200,** since the image capturing members are provided with rotational capability of 360 degrees along the horizontal axis *A-A'.* The movable image capturing members **207a, 207b, 207c** and **207d** are configured to capture images of the target-subject **208** in selfie mode.

In yet another aspect of the present invention the movable image capturing members **207a, 207b, 207c** and **207d** possess a wider field of view, to capture panoramic images of the target-subjects from the front the back sides of the apparatus without turning the device **200.**

In a reciprocal manner the corresponding movable image capturing members **207b, 207c** and **207d** are also provided with identical structural configurations that function in tandem with the movable image capturing member **207a,** to capture 3-D images of the target-subject **208.** Considering the identical nature of the constructional aspects of the movable image capturing members **207b, 207c** and **207d,** and for the sake of brevity, the corresponding constructional aspects are not described here. Therefore, it is to be reckoned here all the constructional features as described for the image capturing member **207a** *ipso facto* apply to other image capturing members in a reciprocal manner and also function in the same and reciprocal manner as shown **FIG.2b** and **FIG.2c** and **FIG.2e****.**

The aforementioned various components of camera apparatus **200** are coupled to the aforementioned digital processor **218,** which is a real-time digital processor connected to various controllers. The functions of these components of the device **200** are advantageously managed by the digital processor **218** and executed through Data and Command channel **219.** Thus the data and command channel **219** provides an interface between the various functional components of the device **200** and the digital processor **218.** The data and command channel **219** is based on any standard wireless communication protocols such as Bluetooth, WI-FI, Infrared etc., or wired protocols. The digital processor **218** manages various functions of the device **200,** *inter alia* the control of image capturing members **207a, 207b, 207c** and **207d** in capturing 3-D and 2-D panoramic images of the target-subject **208,** image processing, regulating sensors, ADCs, storing, signal processing, transmitting and displaying 3-D and 2-D panoramic images of the target-subject **208.**

An array of sensors including photo-electric sensors, electro-optical sensors, position sensors, infrared sensors, flash detection sensors, transducers, proximity sensors and other suitable sensors are arranged either in the optics housing or in the body of the device **200** and are connected to the digital processor **218** through data and command channel **219** to provide a feedback on the movement of the arms, convergence of image capturing members at various convergence angles of the target object/subject, regulation of optics of the optics housing assemblies including lens, prism and mirror complexes, in aligning the passage of optical pathways of the target subject to pass through the optics of the optics housing assemblies, autofocusing, object/subject determination, and 3-D face detection, flash detection, etc.

In another aspect of the present invention, a single drive member, which is advantageously a micro motor, can be connected to the each of the image capturing members **207a, 207b, 207c** and **207d,** to actuate pitch, yaw and roll movements, through the digital processor **218,** instead of individual pitch, yaw and roll drive members.

Hitherto, the constructional and functional aspects of the multi-planar camera apparatus of the multi-planar camera apparatus of the present invention have been described, where the movable image capturing members are stationed in the respective camera-receptacles, while capturing the 3-D images of the target-subject, at various converging angles and in multiple planes, by referring to **FIG.2a****,** **FIG.2b****,** **FIG.2c** **FIG.2d** **and** **FIG.2e****,** respectively. However, these 3-D images of the target-subject thus obtained have limited depth angle, since the lateral separation between the left and right image capturing members are limited by the distance between the movable image capturing members.

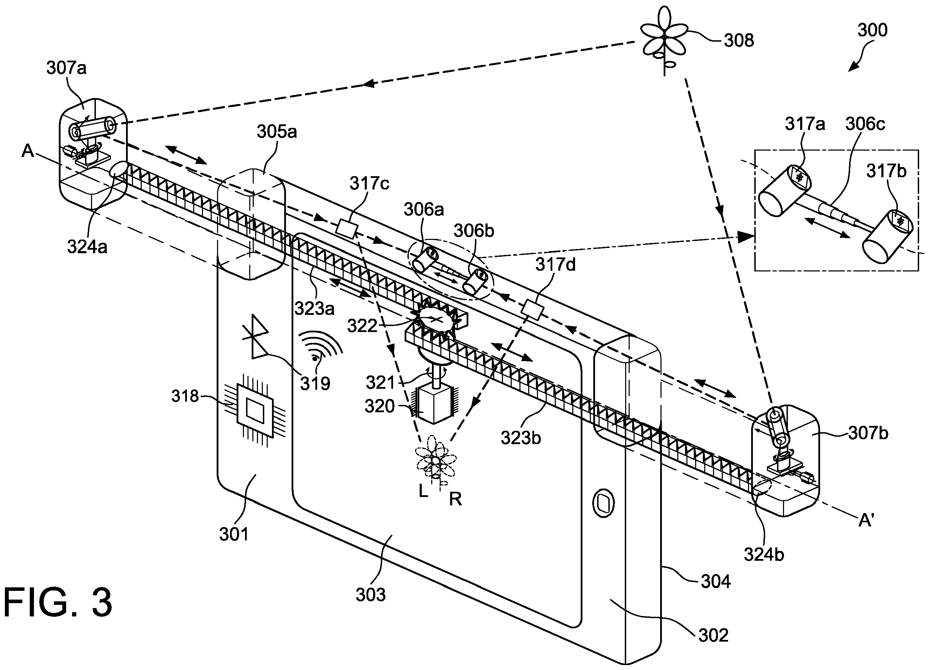

Accordingly, in order to vary or increase the lateral separation between the left and right image capturing members and to obtain an enhanced and alterable depth angle of the target subject, in another aspect of the present invention, preferred embodiments pertaining to the increased lateral separation between left and right movable image capturing members are now described, by referring initially to **FIG.3****,** of the accompanied drawings.

Accordingly, as shown in **FIG.3****,** in order to vary the intervening lateral distance between the left and right movable image capturing members **307a** and **307b,** at least a laterally-movable linear actuating assembly is incorporated in the device **300.** The linear actuating assembly enables the capturing and viewing of left and right 3-D spatial images of a target-subject **308,** at various convergence angles and at variable distances, without tilting the device **300.**

In this arrangement, the user can capture and 3-D views of the target-subject **308** with enhanced depth perception, at different convergence angles, along the axis *A-A'* of the device **300,** by extending and varying the inter-objective distance (intervening distance between left and right image capturing members) between the movable image capturing members **307a** and **307b,** along the axis *A-A'.*

Accordingly, the lateral space variator assembly as shown in **FIG.3** comprises an actuator driving member **320,** which is preferably a micro motor, with a suitable torque and power rating. The actuator driving member **320** is arranged in the housing **301** and connected to the movable image capturing members **307a** and **307b.** A suitable power supply arrangement is also provided to the actuator driving member **320.** The actuator driving member **320** is preferably equipped with a variable speed drive arrangement. The actuator driving member **320** is also equipped to rotate in clockwise and counter-clockwise directions. The location of the actuator driving member **320** is shown in **FIG.3** as centrally-located in the housing **301,** in a representative manner. It is understood here that the location of the actuator driving member **320** can be arranged in any other suitable location of the housing **301.** It is also within the purview of this invention, to adopt more than one actuator driving member so as to meet the functional load requirements of the device **300.** The actuator driving member **320** is connected to the power source of the device **300** and its movements are controlled and executed by the digital processor **318,** in accordance with the user's requirements. The operations of actuator driving member **320** that are controlled by the digital processor **318** include actuation, control of clockwise or counter clockwise directions of its rotor, pausing and stopping controls, selecting and regulating linear movements of each of lateral space variators that are connected to the movable image capturing members **307a** and **307b** and the management of its variable speed. The digital processor **318** can also programmed to include further functionalities to control the movable image capturing members **307a** and **307b,** in furtherance to achieving the stated objectives of the present invention.

A rotatable actuator shaft **321** with a bush, pulley or a connector, is connected to actuator driving member **320** (to the rotor of the driving member) and disposed to receive a rotary drive from the actuator driving member **320.** The rotatable actuator shaft 321 is arranged to rotate both in clockwise and counter-clock wise directions.

A rotary drive member **322** is rotatably connected to the terminal end of the rotatable actuator shaft **321.** The rotary drive member **322** is advantageously a gear and provided with a desired teeth profile and arranged to rotate about the vertical axis of the rotatable actuator shaft **321.** The rotary drive member **322** reciprocates the movement of the rotatable actuator shaft **321** and rotates in corresponding clockwise and counter-clockwise rotary directions.

In another aspect of the present invention, a laterally extendable or movable lateral space variator **323a** having proximal and distal ends, is movably engaged with the rotary drive member **322,** through its proximal end, along the axis *A-A',* as shown in **FIG.3****.** The lateral space variator **323a** in this embodiment is shown as a linear gear having a teeth profile having a fine pitch and corresponds with the teeth profile of the rotary drive member **322.** The shape and configuration of the lateral space variator **323a** can be rectangular, round or any other suitable configuration. The lateral space variator **323a** can be made of metal, plastic or of any suitable alloy materials. The lateral space variator **323a** is meshed with the teeth profile of the rotary drive member **322.** In this arrangement, the rotary movements of the rotary drive member **322** are translated into linear movements of the lateral space variator **323a.**

The distal end of the lateral space variator **323a** is arranged to extend linearly and laterally from the rotary drive member **322,** along the horizontal axis *A-A'* and is integrally connected to the movable image capturing member **307a** through a slot **324a.** The distal end of the lateral space variator **323a** is provided with a suitable profile so that the distal end can pass through the slot **324a** and locks inside. The locking arrangement can be one of press-fit, screw, ratchet or any other suitable locking means.

The lateral space variator **323a,** which is meshed with the rotary drive member **322** also moves linearly along its longitudinal axis, in both the directions. The linear movement of the lateral space variator **323a** is in the fore and aft directions, along the axis *A-A',* in response to the clock and counter-clockwise movements of the rotary drive member **322.**

The lateral space variator **323a,** in this aspect, is exemplarily shown as a flat and elongated member, having a corresponding teeth profile that matches with the teeth profile of the rotary drive member **322.** Other suitable profiles including cylindrical or round profiles can be suitably adapted for the lateral space variator **323a.**

The lateral space variator **323a** is exemplarily shown as linear gear of single unit. It is to be understood here that the linear gear can also be formed of multiple units that are connected to one another in a movable manner.

Accordingly, the lateral space variator **323a** actuates the linear and lateral separation of the left movable image capturing member **307a** along the axis *A-A'* both in extended and contracted manner. Therefore, the movable image capturing member **307a,** as described *supra,* is configured to move laterally away from the housing **301.** Once the desired lateral separation is achieved, the movable image capturing member **307a** is oriented and cyclorotated in horizontal and vertical planes, to capture the required left perspective of the target-subject **308,** with an enhanced depth angle.

Now, the lateral separation of the right movable image capturing member is described by again referring to **FIG.3****.** In yet another aspect of the present invention, a laterally extendable or movable lateral space variator **323b** having proximal and distal ends, is movably engaged with the rotary drive member **322,** through its proximal end, as shown in **FIG.3****,** along the axis *A-A'.* The lateral space variator **323b** is positioned substantially parallel to the lateral space variator **323a** and in the opposite direction. In other words, the lateral space variators **323a** and **323b** are arranged to move laterally in opposite directions along the axis *A-A'.*

The lateral space variator **323b** in this embodiment is shown as a linear gear having a teeth profile having a fine pitch and corresponds with the teeth profile of the rotary drive member **322.** The shape and configuration of the lateral space variator **323b** can be rectangular, round or any other suitable configuration. The lateral space variator **323a** can be made of metal, plastic or of any suitable alloy materials. The lateral space variator **323a** is meshed with the teeth profile of the rotary drive member **322.** In this arrangement, the rotary movements of the rotary drive member **322** are translated into linear movements of the lateral space variator **323b.**

The distal end of the lateral space variator **323b** is arranged to extend linearly and laterally from the rotary drive member **322,** along the horizontal axis *A-A'* and is integrally connected to the movable image capturing member **307b** through a slot **324b.** The distal end of the lateral space variator **323b** is provided with a suitable profile so that the distal end can pass through the slot **324b** and locks inside. The locking arrangement can be one of press-fit, screw, ratchet or any other suitable locking means.

The lateral space variator **323b,** which is meshed with the rotary drive member **322** also moves linearly along its longitudinal axis, in both the directions. The linear movement of the lateral space variator **323b** is in the fore and aft directions, along the axis *A-A',* in response to the clock and counter-clockwise movements of the rotary drive member **322.**

The lateral space variator **323b,** in this aspect, is exemplarily shown as a flat and elongated member, having a corresponding teeth profile that matches with the teeth profile of the rotary drive member **322.** Other suitable profiles including cylindrical or round profiles can be suitably adapted for the lateral space variator **323b.**

The lateral space variator **323b** is exemplarily shown as linear gear of single unit. It is to be understood here that the linear gear can also be formed of multiple units that are connected to one another in a movable manner.

Accordingly, the lateral space variator **323b** actuates the linear and lateral separation of the left movable image capturing member **307b** along the axis *A-A'* both in extended and contracted manner. Therefore, the movable image capturing member **307b,** as described *supra,* is configured to move laterally away from the housing **301.** Once the desired lateral separation is achieved, the movable image capturing member **307b** is oriented and cyclorotated in horizontal and vertical planes, to capture the required right perspective of the target-subject **308,** with an enhanced depth angle or a variable depth angle.

In this manner, an identical and reciprocal lateral space variator **323b** is arranged with its proximal end connected to the rotary gear **322** and its distal end connected to a movable image capturing member **307b** through the slot **324b.** The arrangement of the lateral space variators **323a** and **323b** are parallel and non-axial to each other and arranged to move in opposing directions.

In yet another aspect of the present invention the rotary movement of the rotary gear **322** causes lateral movement of the lateral space variators **323a** and **323b,** in linear and opposing directions. In other words, the rotation of the rotary drive member **322** causes the extension or retraction of the lateral space variators **323a** and **323b** away from or towards the housing **301.** By altering the extension of the lateral space variators **323a** and **323b,** the interspatial distance between lens assemblies of the image capturing members **307a** and **307b** are varied and once the desired spatial distance is achieved the image capturing members **307a** and **307b** are adjusted to orient and cyclorotate in horizontal and vertical planes, to capture the required left and right perspectives of the target-subject **308,** with an enhanced depth angle. The images of the target-subject **308** thus produced can be viewed through the eye piece complexes **306a** and **306b** having image viewing screens, directly, or on the display unit **303** through polarized 3-D glasses.

In further aspect of the present invention, the movable image capturing members **307a** and **307b** are disposed substantially at vertical meridians to horizon, not only while the movable image capturing members **307a** and **307b** are located in the respective camera-receptacles but also while the image capturing members **307a** and **307b** are displaced laterally and cyclorotated in horizontal and vertical planes, while converging on the target-subject **308.** In other words, the image capturing members **307a** and **307b** maintain their vertical meridian positions to the horizon, even when the housing **301** of the device **300** is tilted, while capturing the 3-D images at various converging angles.

The aforementioned movements of the lateral space variators **323a** and **323b** and image capturing members **307a** and **307b** are regulated and controlled by the digital processor **318** and executed through data and command channel **319.**

The respective movements of the lateral space variators **323a** and **323b** can be synchronous and asynchronous. Horizon indicators along with gyrosensors are also incorporated for balancing the left and right images of the target-subject **308.**

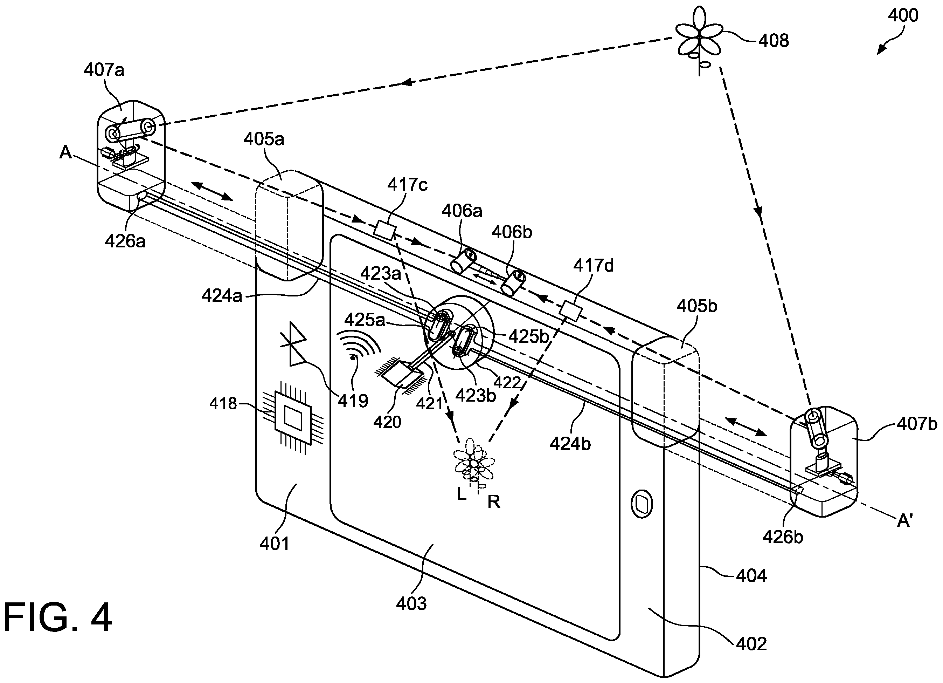

In yet another embodiment of the present invention, a linear actuating assembly, implemented by means of a non-gear arrangement, to actuate and position the movable image capturing members **407a** and **407b** and to capture left and right 3-D images of the target- subject **408,** is now described by referring to **FIG.4****.**

In this arrangement, the user can capture and 3-D views of the target-subject **408** with enhanced depth perception, at different convergence angles, along the axis *A-A'* of the device **400,** by extending and varying the inter-objective distance (intervening distance between left and right image capturing members) between the movable image capturing members **407a** and **407b,** along the axis *A-A'.*

Accordingly, the lateral space variator assembly as shown in **FIG.4** comprises an actuator driving member **420,** which is preferably a micro motor, with a suitable torque and power rating. The actuator driving member **420** is arranged in the housing **401** and connected to the movable image capturing members **407a** and **407b.** A suitable power supply arrangement is also provided to the actuator driving member **420.** The actuator driving member **420** is preferably equipped with a variable speed drive arrangement. The actuator driving member **420** is also equipped to rotate in clockwise and counter-clockwise directions. The location of the actuator driving member **420** is shown in **FIG.4** as centrally-located in the housing **401,** in a representative manner. It is understood here that the location of the actuator driving member **420** can be arranged in any other suitable location of the housing **401.** It is also within the purview of this invention, to adopt more than one actuator driving member so as to meet the functional load requirements of the device **400.** The actuator driving member **420** is connected to the power source of the device **400** and its movements are controlled and executed by the digital processor **418,** in accordance with the user's requirements. The operations of actuator driving member **420** that are controlled by the digital processor **418** include actuation, control of clockwise or counter clockwise directions of its rotor, pausing and stopping controls, selecting and regulating linear movements of each of lateral space variators that are connected to the movable image capturing members **407a** and **407b** and the management of its variable speed. The digital processor **418** can also programmed to include further functionalities to control the movable image capturing members **407a** and **407b,** in furtherance to achieving the stated objectives of the present invention.

A rotatable actuator shaft **421** with a bush, pulley or a connector, is connected to actuator driving member **420** (to the rotor of the driving member) and disposed to receive a rotary drive from the actuator driving member **420.** The rotatable actuator shaft **421** is arranged to rotate both in clockwise and counter-clock wise directions.

A rotary drive member **422** is rotatably connected to the terminal end of the rotatable actuator shaft **421.** The rotary drive member **422** is advantageously a gear and provided with a desired teeth profile and arranged to rotate about the vertical axis of the rotatable actuator shaft **421.** The rotary drive member **422** reciprocates the movement of the rotatable actuator shaft **421** and rotates in corresponding clockwise and counter-clockwise rotary directions.

A rotatable disc **422** is connected to the shaft **421** and is arranged to rotate in clock and counter clock directions. Pins **423a** and **423b** are mounted on either side of the rotatable disc **422** and are preferably positioned diagonally opposite to each other. The pins **423a** and **423b** rotate along the rotational axis of the rotatable disc **422.** A lateral space variator **424a,** with a proximal and distal end is connected to the pin **423a.** The proximal end, which is closer to the rotatable disc **422,** is configured to have an eye **425a,** which is a pass-through passage. The proximal end of the lateral space variator **424a** is movably mounted on the pin **423a** through the eye **425a.** The rotation of the rotatable disc **422** and the pin **423a** cause laterally extendable linear motion to the lateral space variator **424a.** The clockwise and counter clockwise movements of the rotatable disc **422** effects aft and fro lateral movements of the lateral space variator **424a.** In other words, the lateral space variator **424a** moves away from and towards the rotatable disc **422,** depending on the clockwise and counter clock wise rotation of the rotatable disc **422.**

Similarly, a lateral space variator **424b,** with a proximal and distal end is connected to the pin **423b.** The proximal end which is closer to the rotatable disc **422** is configured to have an eye **425b.** The proximal end of the lateral space variator **424b** is movably mounted on the pin **423b** through the eye **425b.** The rotation of the rotatable disc **422** also simultaneously causes the lateral movement of the lateral space variator **424b,** in an opposite direction to that of the arm **424a.** Thus the movable image capturing members **407a** and **407b** that are connected to the arms **424a** and **424b,** also move laterally and in opposite directions, thereby altering the inter-objective distance between the lens assemblies of the movable image capturing members **407a** and **407b.**

In this arrangement, the clockwise rotation of the rotatable disc **422** causes lateral movement of the lateral space variators **424a** and **424b** which form part of first pair of laterally-movable lateral space variator assemblies are arranged to move in linear and opposing directions. In other words, the rotation of the rotatable disc **422** causes the extension or retraction of the lateral space variators **424a** and **424b** away from or towards the housing **401** of the device **400.** By altering the position of the lateral space variators **424a** and **424b,** the interspatial distance between lens assemblies of the movable image capturing members **407a** and **407b** are varied and once the desired spatial distance is achieved, the movable image capturing members **407a** and **407b** are oriented and cyclorotated in horizontal and vertical planes, to capture the required right perspective of the target-subject **408,** with an enhanced depth angle. The images of the target-subject **408** thus produced can be viewed through the eye piece complexes **406a** and **406b** having image viewing screens, directly, or on the display unit **403** through polarized 3-D glasses and by the incorporation of the beam splitters **417c** and **417d.**

In further aspect of the present invention, the movable image capturing members **407a** and **407b** are disposed substantially at vertical meridians to the horizon, not only while the movable image capturing members **407a** and **407b** are located in the respective camera-receptacles but also while the image capturing members **407a** and **407b** are displaced laterally and cyclorotated in horizontal and vertical planes, while converging on the target-subject **408.** In other words, the image capturing members **407a** and **407b** maintain their vertical meridian positions to the horizon even when the housing **401** of the device **400** is tilted, while capturing the 3-D images at various converging angles.

The aforementioned movements of the lateral space variators **423a** and **423b** and image capturing members **407a** and **407b** are regulated and controlled by the digital processor **418** and executed through data and command channel **419.**

The respective movements of the lateral space variators **423a** and **423b** can be synchronous and asynchronous. Horizon indicators along with gyrosensors are also incorporated for balancing the left and right images of the target-subject **408.**

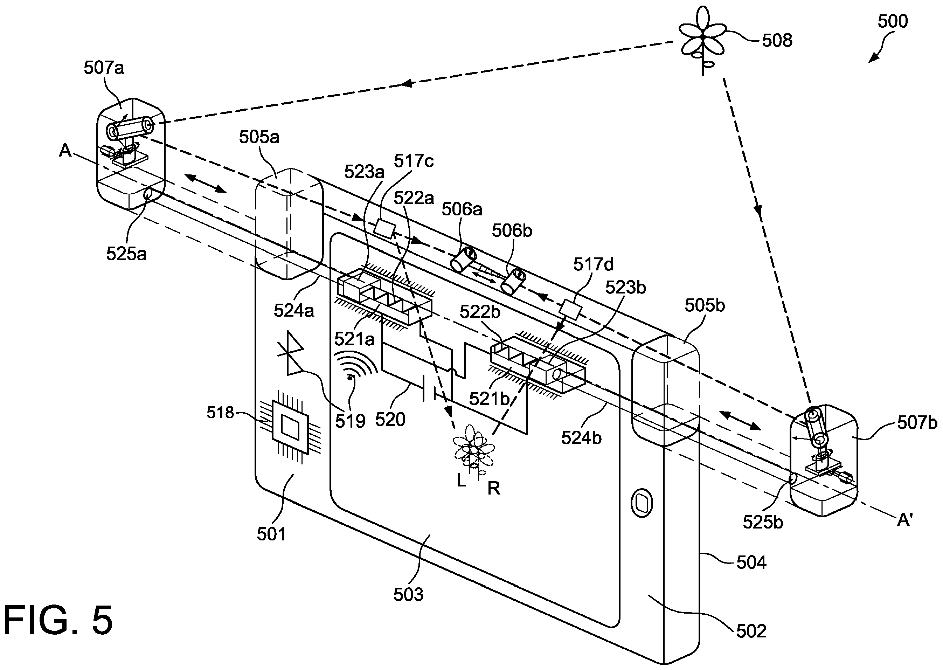

In another embodiment of the present invention, a linear actuating assembly is implemented by means of a piston-cylinder arrangement, to actuate and position the movable image capturing members **507a** and **507b,** in order to capture left and right 3-D images, at various convergence angles of the target-subject **508,** by varying the inter-objective distance between the movable image capturing members **507a** and **507b.** Such linear actuating assembly is now described by referring to **FIG.5****.** In this linear actuating assembly, an enclosure **521a,** which is a hollow cylindrical member, preferably of metal, is connected to a power supply switching circuit **520** as shown in **FIG.5****,** to supply current to the assembly. The shape of the enclosure **521a** can be rectangular or any geometrical shapes and is arranged in the housing **501** of the device **500** as shown **FIG.5****.** A movable piston **523a** is housed in the enclosure **521a** and arranged to move in lateral directions. A lateral space variator **524a** is connected to the piston **523a** as shown in **FIG.5****.** A biasing member **522a** is preferably a spring or coil, which is made of shape memory alloy (SMA), is abutted to the piston **523a** on one side and to the inner surface of the enclosure **521a** on the other side. The material for the biasing member can be selected from those SMAs that are sensitive at lower current factors. The combination of application and non-application of energy to the biasing member **522a** causes fro and aft movements of the lateral space variator **524a.** On the application of energy, the biasing member **522a** is heated. The heated biasing member **522a** expands in linear elastic form resulting in the displacement of the piston **523a** in a linear manner. The lateral space variator **524a,** which is movably connected to the piston **523a,** also moves linearly and extends the movable image capturing members **507a** and **507b** away from the housing **501.** The movable image capturing member **507a** is adjusted to move laterally and converge on the target object or subject **508,** at various converging angles to capture left and right 3-D images of the target-subject **508.** Similarly, biasing member **522a** regains its original position after the suspension of energy resulting the cooling of the biasing member **522a.**

In a similar way, an enclosure **521b,** which is a hollow cylindrical member, preferably of metal, is connected to a power supply switching circuit **520** as shown in **FIG.5****,** to supply current to the assembly. The shape of the enclosure **521b** can be rectangular or any geometrical shapes and is arranged in the housing **501** of the device **500** as shown **FIG.5****.** A movable piston **523b** is housed in the enclosure **521b** and arranged to move in lateral directions. A lateral space variator **524b** is connected to the piston **523b** as shown in **FIG.5****.** A biasing member **522b** is preferably a spring or coil, which is made of shape memory alloy (SMA), is abutted to the piston **523b** on one side and to the inner surface of the enclosure **521b** on the other side. The material for the biasing member can be selected from those SMAs that are sensitive at lower current factors. The combination of application and non-application of energy to the biasing member **522b** causes fro and aft movements of the lateral space variator **524b.** On the application of energy, the biasing member **522b** is heated. The heated biasing member **522b** expands in linear elastic form resulting in the displacement of the piston **523b** in a linear manner. The lateral space variator **524b,** which is movably connected to the piston **523b** also moves linearly and extends the movable image capturing member **507b** away from the housing **501.** The movable image capturing member **507b** is adjusted to move laterally and converge on the target object or subject **508,** at various converging angles to capture left and right 3-D images of the target-subject **508.** Similarly, biasing member **522b** regains its original position after the suspension of energy resulting the cooling of the biasing member **522b.**

By altering the position of the lateral space variators **524a** and **524b,** the interspatial distance between lens assemblies of the movable image capturing members **507a** and **507b** are varied and once the desired spatial distance is achieved, the movable image capturing members **507a** and **507b** are oriented and cyclorotated in horizontal and vertical planes, to capture the required right perspective of the target-subject **508,** with an enhanced depth angle. The images of the target-subject **508** thus produced can be viewed through the eye piece complexes **506a** and **506b** having image viewing screens, directly, or on the display unit **503** through polarized 3-D glasses and by the incorporation of the beam splitters **517c** and **517d.**

In further aspect of the present invention, the movable image capturing members **507a** and **507b** are disposed substantially at vertical meridians to the horizon, not only while the movable image capturing members **507a** and **507b** are located in the respective camera-receptacles but also while the image capturing members **507a** and **507b** are displaced laterally and cyclorotated in horizontal and vertical planes, while converging on the target-subject **508.** In other words, the image capturing members **507a** and **507b** maintain their vertical meridian positions to the horizon even when the housing of the device **500** is tilted, while capturing the 3-D images at various converging angles.

The aforementioned movements of the lateral space variators **523a** and **523b** and image capturing members **507a** and **507b** are regulated and controlled by the digital processor **518** and executed through data and command channel **519.**

The respective movements of the lateral space variators **523a** and **523b** can be synchronous and asynchronous. Horizon indicators along with gyrosensors are also incorporated for balancing the left and right images of the target-subject **508.**

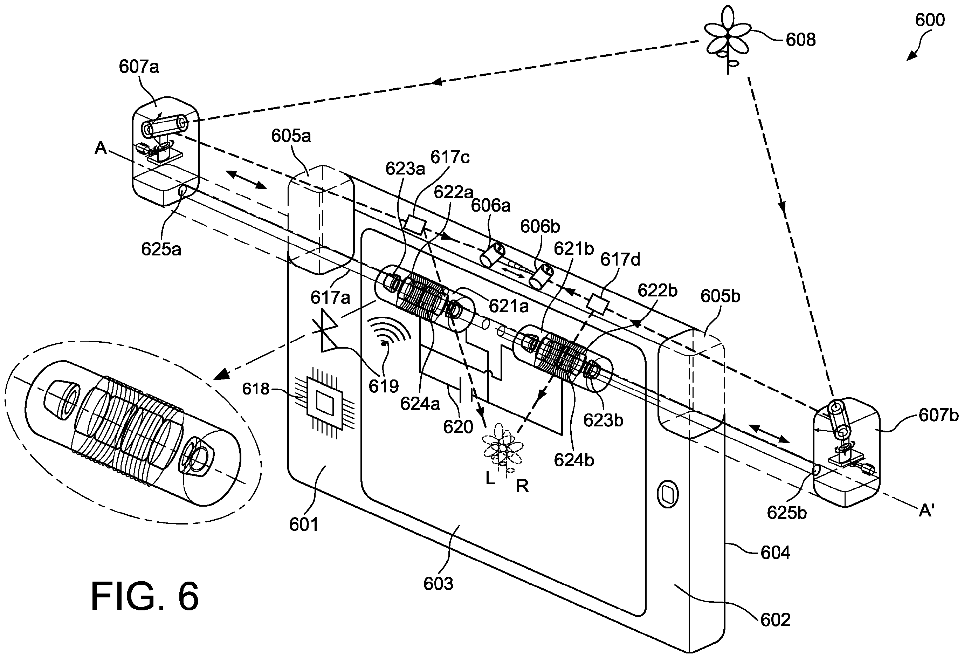

In yet another aspect of the present invention, as shown in **FIG.6****,** the aft and fro linear movements of the movable image capturing members **607a** and **607b** are actuated by means of a lateral space variator assembly that is driven by an electromagnetic field. The lateral space variator assembly includes a cylindrical core **621a** connected to the device **600,** in proximity to camera-receptacle **605a.** The cylindrical core **621a** is wound with coil windings **622a** and connected to a switching circuit **620** to receive a regulated power for a selective energisation. A lateral space variator **617a,** which is non-magnetic stem having proximal and distal ends, is provided. The proximal end of the linear space variator **617a** is movably connected to the cylindrical core **621a** and the corresponding distal end is connected to the movable image capturing member **607a** through a slot **625a.** Moving magnets **624a,** which are preferably annular magnets, are arranged in the cylindrical core **621a** and mounted on the linear later space variator **617a.** The moving magnets **624a** are guided by fixed magnets **623a,** which are arranged on either side of the moving magnets **622a.** The coil windings **622a** are energized by means of suitable switching circuits **620** through switching electronics, to actuate moving magnets **624a** through repulsive magnetic forces. The linear later space variator **617a,** which is enclosed in coil windings **622a** acts as a linear moving-magnet actuator with ring or annular magnets. The lateral space variator **617a** is provided with a proportional action due to the action of repulsive forces (elastomagnetic forces) between the two fixed magnets **623a** and the moving magnets **624a.**
In a similar way, as shown in **FIG.6****,** the aft and fro linear movements of the movable image capturing member **607b,** is actuated by means of a lateral space variator assembly that is driven by an electromagnetic field. The lateral space variator assembly includes a cylindrical core **621b** connected to the device **600,** in proximity to camera-receptacle **605b.** The cylindrical core **621b** is wound with coil windings **622b** and connected to a switching circuit **620** to receive a regulated power for a selective energisation. A linear space variator **617b,** which is non-magnetic stem having proximal and distal ends. The proximal end of the linear space variator **617b** is movably connected to the cylindrical core **621b** and the corresponding distal end is connected to the movable image capturing member **607b** through a slot **625b.** Moving magnets **624b,** which are preferably annular magnets, are arranged in the cylindrical core **621b** and mounted on the lateral space variator **617b.** The moving magnets **624b** are guided by fixed magnets **623a,** which are arranged on either side of the moving magnets **624b.** The coil windings **622b** are energized by means of suitable switching circuits **620** through switching electronics, to actuate moving magnets **624b** through repulsive magnetic forces. The lateral space variator **617b,** which is enclosed in coil windings **622b** acts as a linear moving-magnet actuator with ring or annular magnets. The lateral space variator **617b** is provided with a proportional action due to the action of repulsive forces (elastomagnetic forces) between the two fixed magnets **623b** and the moving magnets **624b.**

By altering the position of the lateral space variators **624a** and **624b,** the interspatial distance between lens assemblies of the movable image capturing members **607a** and **607b** are varied and once the desired spatial distance is achieved, the movable image capturing members **607a** and **607b** are oriented and cyclorotated in horizontal and vertical planes, to capture the required right perspective of the target-subject **608,** with an enhanced depth angle. The images of the target-subject **608** thus produced can be viewed through the eye piece complexes **606a** and **606b** having image viewing screens, directly, or on the display unit **603** through polarized 3-D glasses and by the incorporation of the beam splitters **617c** and **617d.**

In further aspect of the present invention, the movable image capturing members **607a** and **607b** are disposed substantially at vertical meridians to horizon, not only while the movable image capturing members **607a** and **607b** are located in the respective camera-receptacles but also while the image capturing members **607a** and **607b** are displaced laterally and cyclorotated in horizontal and vertical planes, while converging on the target-subject **608.** In other words, the image capturing members **607a** and **607b** maintain their vertical meridian positions to the horizon, even when the housing of the device **600** is tilted, while capturing the 3-D images at various converging angles.

The aforementioned movements of the lateral space variators **623a** and **623b** and image capturing members **607a** and **607b** are regulated and controlled by the digital processor **618** and executed through data and command channel **619.**

The respective movements of the lateral space variators **623a** and **623b** can be synchronous and asynchronous. Horizon indicators along with gyrosensors are also incorporated for balancing the left and right images of the target-subject **608.**

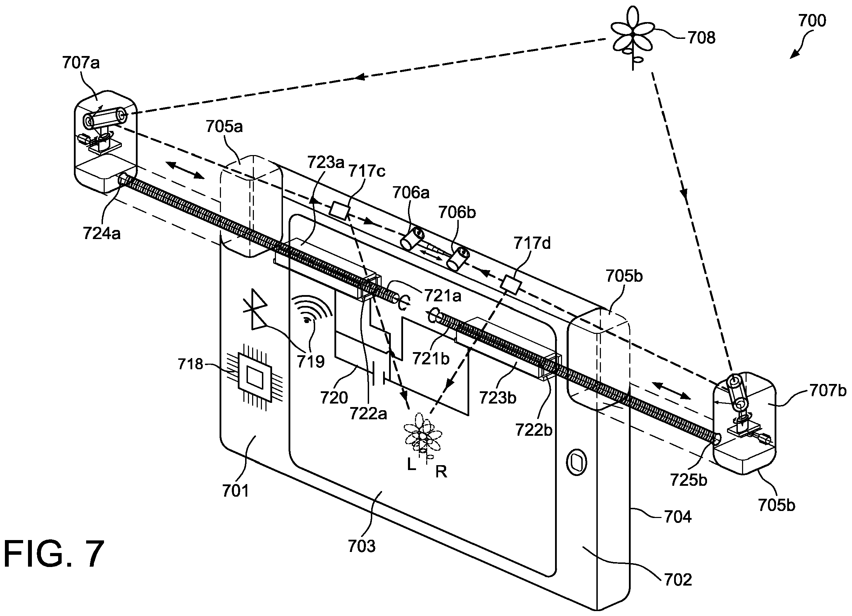

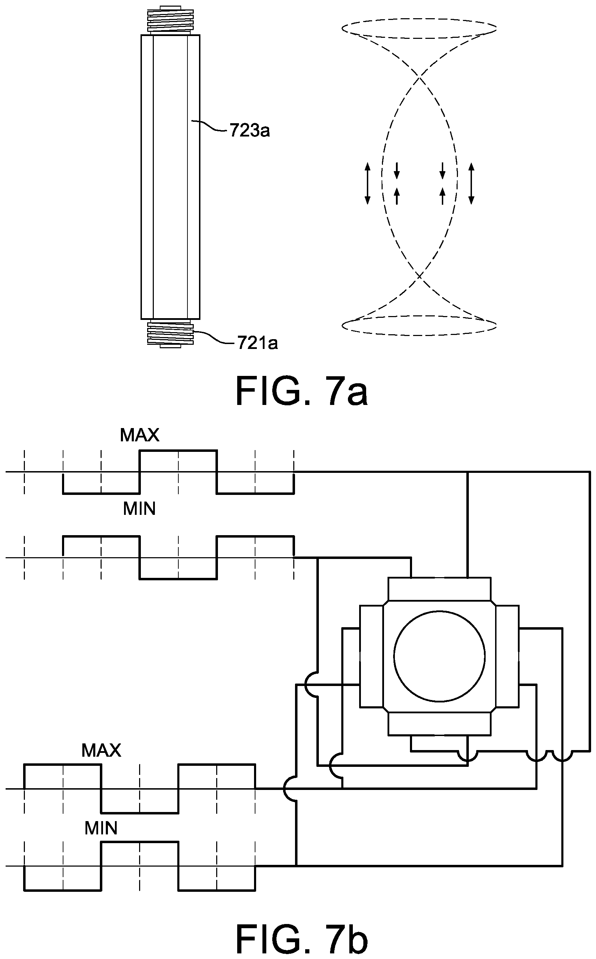

In further aspect of the present invention as shown in **FIG.7****,** the lateral space variator assembly for the actuation of lateral space variators **721a** and **721b** is a combination of a screw and nut assembly. The screw and nut assembly includes a lateral space variator **721a,** which is an elongated screw that is meshed with a nut **722a.** One of the terminal ends of the lateral space variator **721a** is connected to the movable image capturing members **707a** through a slot **723a.** A plurality of vibrating piezoelectric ceramic elements **723a** is mounted on the lateral space variator **721a** are connected to the switching circuit **720** as shown in **FIG.7b****,** to impart small orbital vibrations to the nut **722a** at its ultrasonic resonant frequency, resulting the linear movement of the lateral space variator **721a.** The thread friction of drives the lateral space variator **721a** forward or backward in a linear direction as shown in **FIGs.7** and **7a****.**

In a reciprocal manner, as shown in **FIG.7****,** the screw and nut assembly includes a lateral space variator **721b,** which is an elongated screw that is meshed with a nut **722b.** One of the terminal ends of the lateral space variator **721b** is connected to the movable image capturing members **707b** through a slot **723b**. A plurality of vibrating piezoelectric ceramic elements **723b** is mounted on the lateral space variator **721b** are connected to the switching circuit **720** as shown in **FIG.7b****,** to impart small orbital vibrations to the nut **722b** at its ultrasonic resonant frequency. The thread friction of drives the lateral space variator **721b** forward or backward in a linear direction as shown in **FIGs.7** and **7a****.**

The switching circuit **720** as shown in **FIG.7b****,** provides a 4-phase motor drive with a suitable phase difference, to the lateral space variators **721a** and **721b.** The positive and negative phase difference imparts left and right linear movements to the lateral space variators **721a** and **721b.**

By altering the position of the lateral space variators **724a** and **724b,** the interspatial distance between lens assemblies of the movable image capturing members **707a** and **707b** are varied and once the desired spatial distance is achieved, the movable image capturing members **707a** and **707b** are oriented and cyclorotated in horizontal and vertical planes, to capture the required right perspective of the target-subject **708,** with an enhanced depth angle. The images of the target-subject **708** thus produced can be viewed through the eye piece complexes **706a** and **706b** having image viewing screens, directly, or on the display unit **703** through polarized 3-D glasses and by the incorporation of the beam splitters **717c** and **717d.**

In further aspect of the present invention, the movable image capturing members **707a** and **707b** are disposed substantially at vertical meridians to horizon, not only while the movable image capturing members **707a** and **707b** are located in the respective camera-receptacles but also while the image capturing members **707a** and **707b** are displaced laterally and cyclorotated in horizontal and vertical planes, while converging on the target-subject **708.** In other words, the image capturing members **707a** and **707b** maintain their vertical meridian positions to the horizon, even when the housing of the device **700** is tilted, while capturing the 3-D images at various converging angles.

The aforementioned movements of the lateral space variators **723a** and **723b** and image capturing members **707a** and **707b** are regulated and controlled by the digital processor **718** and executed through data and command channel **719.**

The respective movements of the lateral space variators **723a** and **723b** can be synchronous and asynchronous. Horizon indicators along with gyrosensors are also incorporated for balancing the left and right images of the target-subject **708.**

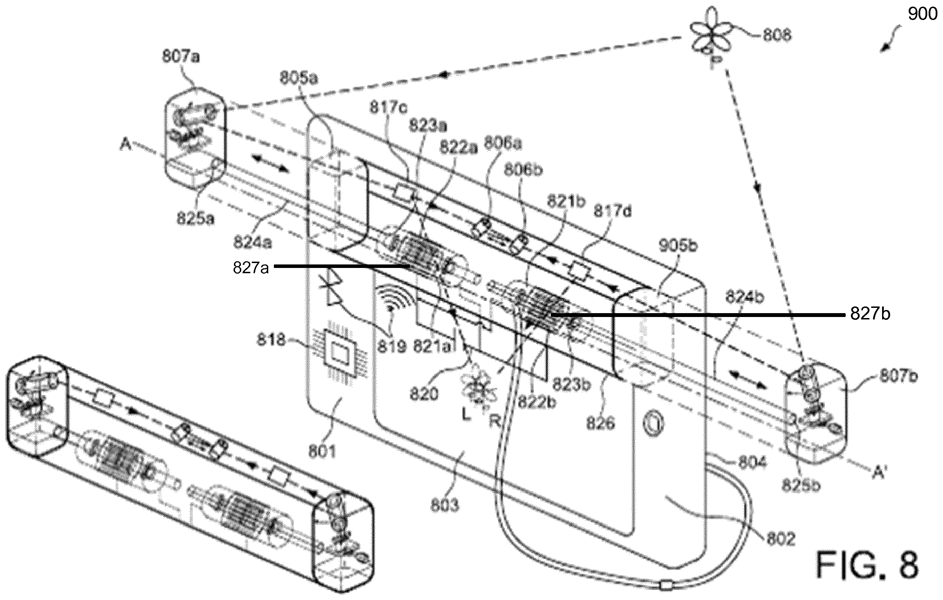

Hitherto, various exemplary embodiments of the lateral space variator assemblies that are integrated within the body of the device have been described. Now, in another aspect of the present invention, as shown in **FIG.8****,** the lateral space variator assembly can be connected to the body of the device **800** by means of an adaptor **826** to convert an existing computing or a communication device into a device that can capture three-dimensional (3-D) spatial images of a target subject, at various depth angles and in multiple planes. The adaptor **826,** as shown in this preferred embodiment, is an arrangement having a multi-planar camera apparatus, as shown in one of the preceding embodiments, which is connected, externally, to the body of a computing or a communication device **800,** as shown in **FIG.8**, to enable capturing of three-dimensional (3-D) spatial images of a target subject **808,** at various depth angles and in multiple planes. In other words, by fixing the adaptor **826** to the known device **800,** the device **800** can be enabled to capture three-dimensional (3-D) spatial images of a target subject, at various depth angles and in multiple planes. The adaptor **826** includes a lateral space variator assembly having a cylindrical core **821a** connected to the device **800,** in proximity to camera-receptacle **805a.** The cylindrical core **821a** is wound with coil windings **822a** and connected to a switching circuit **820** to receive a regulated power for a selective energisation. A lateral space variator **824a,** which is non-magnetic stem having proximal and distal ends, is provided. The proximal end of the lateral space variator **824a** is movably connected to the cylindrical core **821a** and the corresponding distal end is connected to the movable image capturing member **807a** through a slot **825a.** Moving magnets **827a**, which are preferably annular magnets, are arranged in the cylindrical core **821a** and mounted on the lateral space variator **824a.** The moving magnets **827a** are guided by fixed magnets **823a,** which are arranged on either side of the moving magnets **827a**. The coil windings **822a** are energized by means of suitable switching circuits **820** through switching electronics, to actuate moving magnets **827a** through repulsive magnetic forces. The lateral space variator **824a**, which is enclosed in coil windings **822a,** acts as a linear moving-magnet actuator with ring or annular magnets. The lateral space variator **824a** is provided with a proportional action due to the action of repulsive forces (elastomagnetic forces) between the two fixed magnets **823a** and the moving magnets **827a**.

In a similar way, as shown in **FIG.8**, the aft and fro linear movements of the movable image capturing member **807b,** is actuated by means of a lateral space variator assembly that is driven by an electromagnetic field. The lateral space variator assembly includes a cylindrical core **821b** connected to the device **800,** in proximity to camera-receptacle **805b.** The cylindrical core **821b** is wound with coil windings **822b** and connected to a switching circuit **820** to receive a regulated power for a selective energisation. A lateral space variator 824b, which is non-magnetic stem having proximal and distal ends. The proximal end of the linear space variator 824b is movably connected to the cylindrical core **821b** and the corresponding distal end is connected to the movable image capturing member **807b** through a slot **825b.** Moving magnets **827b**, which are preferably annular magnets, are arranged in the cylindrical core **821b** and mounted on the linear lateral space variator 824b. The moving magnets **827b** are guided by fixed magnets **823b**, which are arranged on either side of the moving magnets **827b**. The coil windings **822b** are energized by means of suitable switching circuits **820** through switching electronics, to actuate moving magnets **827b** through repulsive magnetic forces. The lateral space variator **824b**, which is enclosed in coil windings **822b** acts as a linear moving-magnet actuator with ring or annular magnets. The lateral space variator **824b** is provided with a proportional action due to the action of repulsive forces (elastomagnetic forces) between the two fixed magnets **823b** and the moving magnets **827b.**

By altering the position of the lateral space variators **824a** and **824b,** the interspatial distance between lens assemblies of the movable image capturing members **807a** and **807b** are varied and once the desired spatial distance is achieved, the movable image capturing members **807a** and **807b** are oriented and cyclorotated in horizontal and vertical planes, to capture the required right perspective of the target-subject **808,** with an enhanced depth angle. The images of the target-subject **808** thus produced can be viewed through the eye piece complexes **806a** and **806b** having image viewing screens, directly, or on the display unit **803** through polarized 3-D glasses and by the incorporation of the beam splitters **817c** and **817d.**

In further aspect of the present invention, the movable image capturing members **807a** and **807b** are disposed substantially at vertical meridians to the horizon, not only while the movable image capturing members **807a** and **807b** are located in the respective camera-receptacles but also while the image capturing members **807a** and **507b** are displaced laterally and cyclorotated in horizontal and vertical planes, while converging on the target-subject **808.** In other words, the image capturing members **807a** and **807b** maintain their vertical meridian positions to the horizon, even when the housing of the device **800** is tilted, while capturing the 3-D images at various converging angles.

The aforementioned movements of the lateral space variators **824a** and **824b** and image capturing members **807a** and **807b** are regulated and controlled by the digital processor **818** and executed through data and command channel **819.**

The respective movements of the lateral space variators **824a** and **824b** can be synchronous and asynchronous. Horizon indicators along with gyrosensors are also incorporated for balancing the left and right images of the target-subject **808.**

The adaptor **826** with above-mentioned components can be conveniently fixed to the device **800** by any fixation means such as press fit, screws etc., and with an interface device like USB, so as to integrate with other electronic components of the device.

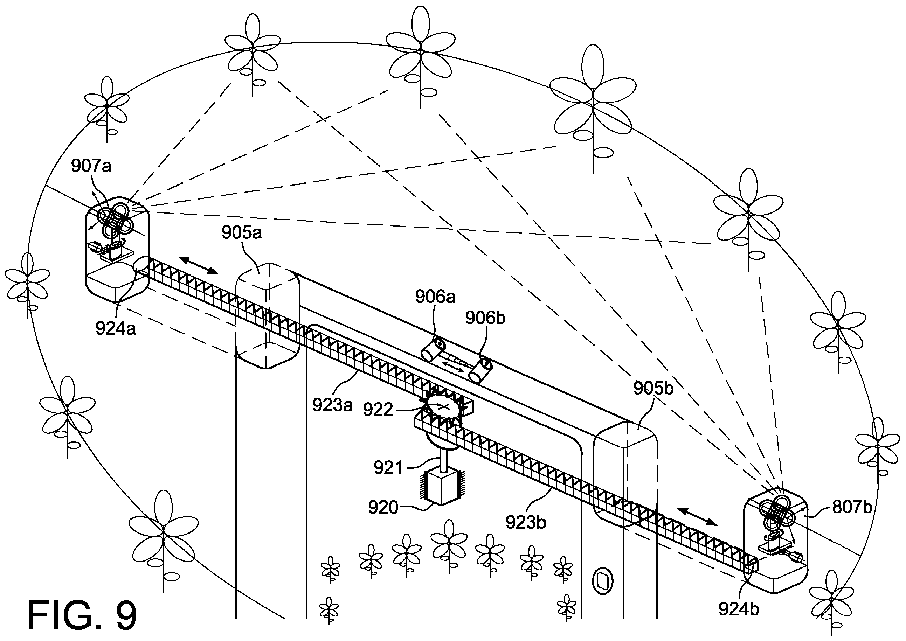

In the foregoing embodiment, the linear moving-magnet actuator with ring or annular magnets is shown in **FIG.8**, exemplarily, to actuate the lateral space variators **824a** and **824b**. However, it is understood here that the adaptor **826** can also be suitably arranged with lateral space variators that are actuated by laterally-movable linear gears, laterally-movable linear stems that are connected to a rotatable disc, laterally-movable linear stems that are connected to a cylinder and a movable piston, laterally-movable threaded stems that are connected to nuts and screws, as shown in the preceding embodiments. In yet another aspect of the present invention, embodiments pertaining to constructional features of the device **900** that exhibits panoramic viewing capabilities are now described by referring to **FIG.9****.** The linear actuating assembly for this embodiment can be selected from any one of the aforementioned assemblies. Accordingly, in an exemplary manner, the linear actuating assembly that is driven by a gear arrangement is shown to implement the panoramic viewing capabilities of the device **900.**

The device **900** with panoramic optics captures an entire 360 degree panorama in a single shot by using the timer mechanism of the device, thereby dispensing with stitching of individual snaps to create panoramic pictures. The device **900** having movable image capturing members **907a** and **907b** with vertical field of views and horizontal field of views in the range of 0-360 degrees, can capture an entire panorama with one single picture. The lateral space variator assembly of the device **900** also facilitates in varying the distance between the movable image capturing members **907a** and **907b,** thereby enhancing the horizontal field of view. In addition, pitch, yaw and roll movements of the movable image capturing members **907a** and **907b,** as shown in **FIG.2a** and **FIG.2b** enhances the vertical field of view of the device. In other words, by using the device **900** of the present invention, a 360 degree rotation along the front and back portions of the camera is accomplished, without altering the position of the device **900.**

In order to extend further the inter-objective distance between the left and right movable image capturing members **907a** and **907b,** in yet another aspect of the present invention, a linear actuating assembly is incorporated in the device **900,** as shown in **FIG.9****,** to actuate and vary the inter-objective distance between the lens assemblies of the movable image capturing members **907a** and **907b.** This facilitates the capturing and viewing a target-subject(s) **908,** at various positions and at variable distances, without tilting the device **900** or the neck portion of the user. In this arrangement the user can capture panoramic views of the target-subject(s) **908** as shown in **FIG.9****,** by extending and varying the inter-objective distance between the movable image capturing members **907a** and **907b,** along the axis *A-A'.*

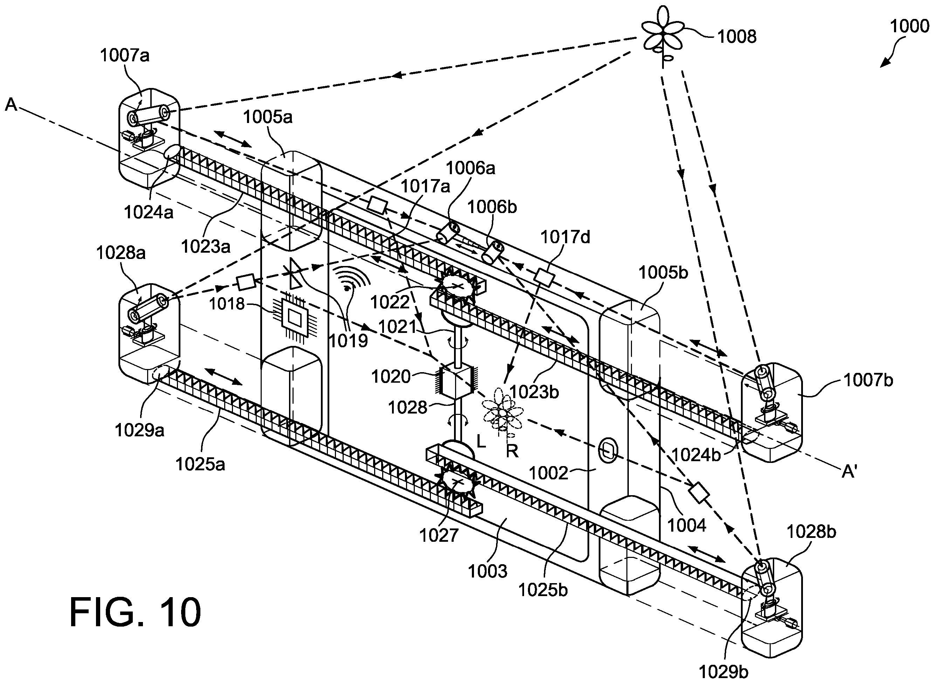

In further aspect of the present invention as shown in **FIG.10****,** a plurality of laterally-movable lateral space variator assemblies are integrated with the device **1000,** to capture 3-D images of target subject **1008** at various convergence angles and with enhanced depth perception. In this embodiment, a gear-based lateral space variator assembly is shown exemplarily to implement a plurality of lateral space variator assemblies. It is also understood here that the number of lateral space variator assemblies can be suitably increased depending on the user requirements. Accordingly, the lateral space variator assembly as shown in **FIG.10** comprises an actuator driving member **1020,** which is preferably a micro motor, with a suitable torque and power rating. The actuator driving member **1020** is arranged in the housing **1001** and connected to the first set of movable image capturing members **1007a** and **1007b,** as hereinafter described. The actuator driving member **1020** is a micro motor and is preferably equipped with a variable speed drive arrangement. The actuator driving member **1020** is also equipped to rotate in clockwise and counter-clockwise directions. The actuator driving member is arranged in the housing **1001** as shown in **FIG.10****.** The actuator driving member **1020** is connected to the power source of the device **1000** and is operated by the digital processor **1018.** The operations of actuator driving member **1020** that are controlled by the digital processor include actuation, control of clockwise or counter clockwise directions of its rotor, pausing and stopping controls, selecting and regulating linear movements of each of the linear arms that are connected to the first set of movable image capturing members **1007a** and **1007b** and the management of its variable speed. The digital processor **1018** can also programmed to include further functionalities to control the first set of movable image capturing members **1007a** and **1007b,** in furtherance to achieving the stated objectives of the present invention. A first rotatable actuator shaft **1021** with a bush, pulley or a connector, is connected to I actuator driving member **1020** (to the rotor of the driving member) and disposed to receive a rotary drive from the actuator driving member **1020.** The first rotatable actuator shaft **1021** rotates both clockwise and counter-clock wise directions.

A first rotary drive member **1022,** which is a rotary gear, is rotatably connected to the terminal end of the first rotatable actuator shaft **1021.** The first drive member **1022** is provided with a desired teeth profile and arranged to rotate about the vertical axis of the rotatable first actuator shaft **1021.** The first drive member **1022** reciprocates the movement of the first rotatable actuator shaft **1021** and rotates in corresponding clockwise and counter-clockwise rotary directions.

In yet another aspect of the present invention, a laterally extendable or movable first lateral space variator **1023a** having a proximal and a distal end is provided with a teeth profile corresponding to the teeth profile of the first drive member **1022** and is movably engaged with the first drive member **1022,** through its proximal end, as shown in **FIG.10****.** The configuration of the first lateral space variator **1023a** can be rectangular, round or any other suitable configuration, preferably with a fine pitch. The first lateral space variator **1023a** can made of metal, plastic or of any suitable alloy materials. The first lateral space variator **1023a** is meshed with the teeth profile of the first drive member **1022.** In this arrangement the rotary movements of the first drive member **1022** is translated into linear movement of the lateral space variator **1023a.**

The distal end of the first lateral space variator **1023a** is arranged to extend linearly and laterally from the first drive member **1022,** along the horizontal axis *A-A'* and is integrally connected to the first movable image capturing member **1007a** through the slot **1024a.** The distal end of the first lateral space variator **1023a** is provided with a suitable profile so that the distal end can pass through the slot **1024a** and lock inside. The locking arrangement can be one of press-fit, screw, ratchet or any other suitable locking means.

The first lateral space variator **1023a,** which is meshed with the first drive member **1022** also moves linearly along its longitudinal axis. The linear movement of the first lateral space variator **1023a** is in the fore and aft directions, along the horizon *A-A'*, consequent to the clock and counter-clockwise movements of the first drive member **1022.**

The first lateral space variator **1023a,** in this aspect, is exemplarily shown as a flat and elongated member having a corresponding teeth profile that matches with the teeth profile of the first drive member **1022.** Other suitable profiles including cylindrical or round profiles can be suitably adapted for the first lateral space variator **1023a.**

In yet another aspect of the present invention, a laterally extendable or movable first lateral space variator **1023b** having a proximal and a distal end having a corresponding teeth profile and is movably engaged with the drive member gear **1022,** which is a rotary gear, through its proximal end, as shown in **FIG.10****.** The configuration of the first lateral space variator **1023b** can be rectangular, round or any other suitable configuration, preferably with a fine pitch. The first lateral space variator **1023b** can made of metal, plastic or of any suitable alloy materials. The first lateral space variator **1023b** is meshed with the teeth profile of the first drive member **1022.** In this arrangement the rotary movements of the first drive member **1022** is translated into linear movement of the first lateral space variator **1023b.**

The distal end of the first lateral space variator **1023b** is arranged to extend linearly and laterally from the first drive member **1022,** along the horizon *A-A'* and is integrally connected to the first movable image capturing member **1007b** through the slot **1024b.** The distal end of the first lateral space variator **1023b** is provided with a suitable profile so that the distal end can pass through the slot **1024b** and lock inside. The locking arrangement can be one of press-fit, screw, ratchet or any other suitable locking means.

The first lateral space variator **1023b,** which is meshed with the first drive member **1022** also moves linearly along its longitudinal axis. The linear movement of the first lateral space variator **1022b** is in the fore and aft directions, along the axis *A-A',* consequent to the clock and counter-clockwise movements of the first drive member gear **1022.**

The first lateral space variator **1023b,** in this aspect, is exemplarily shown as a flat member having a corresponding teeth profile that matches with the teeth profile of the first drive member **1022.** Other suitable profiles including cylindrical or round profiles can be suitably adapted for the first lateral space variator **1023b.** The arrangement of the first lateral space variators **1023a** and **1023b** are parallel and non-axial to each other and arranged to move in opposing directions.

In yet another aspect of the present invention the rotary movement of the first drive member **1022** causes lateral movement of the lateral space variators **1023a** and **1023b,** which form part of first pair of laterally-movable lateral space variator assemblies, in linear and opposing directions. In other words, the rotation of the first drive member **1022** causes the extension or retraction of the first lateral space variators **1023a** and **1023b** away from or towards the housing **1001.**

A second set of lateral space variators **1025a** and **1025b,** which form part of second pair of lateral space variator assemblies having a similar configuration as that of the first set of later space variators **1023a** and **1023b** are connected to the first lateral space driver **1020.** A second rotatable actuator shaft **1028** with a bush, pulley or a connector, is connected to lateral space driver **1020** (to the rotor of the driving member) and disposed to receive a rotary drive from the lateral space driver **1020.** The second rotatable actuator shaft **1028** rotates both clockwise and counter-clock wise directions.

A second drive member **1027,** which is a rotary gear, is rotatably connected to the terminal end of the first rotatable actuator shaft **1028.** The second drive member **1027** is provided with a desired teeth profile and arranged to rotate about the vertical axis of the rotatable second actuator shaft **1028.** The second drive member **1027** reciprocates the movement of the second rotatable actuator shaft **1028** and rotates in corresponding clockwise and counter-clockwise rotary directions.

In yet another aspect of the present invention, a laterally extendable or movable second lateral space variator **1025a** having a proximal and a distal end is provided with a teeth profile corresponding to the teeth profile of the second drive member **1027** and is movably engaged with the second drive member **1027,** through its proximal end, as shown in **FIG.10****.** The configuration of the second lateral space variator **1025a** can be rectangular, round or any other suitable configuration, preferably with a fine pitch. The second lateral space variator **1023b** can made of metal, plastic or of any suitable alloy materials. The second lateral space variator **1025a** is meshed with the teeth profile of the second drive member **1027.** In this arrangement the rotary movements of the second drive member **1027** is translated into linear movement of the second lateral space variator **1025a.**

The distal end of the second lateral space variator **1025a** is arranged to extend linearly and laterally from the second drive member **1027,** along the horizon *A-A'* and is integrally connected to the second movable image capturing member **1028a** through the slot **1029a.** The distal end of the second lateral space variator **1025a** is provided with a suitable profile so that the distal end can pass through the slot **1029a** and lock inside. The locking arrangement can be one of press-fit, screw, ratchet or any other suitable locking means.

The second lateral space variator **1025a,** which is meshed with the second drive member **1027** also moves linearly along its longitudinal axis. The linear movement of the second lateral space variator **1025a** is in the fore and aft directions, along the axis *B-B*', consequent to the clock and counter-clockwise movements of the second drive member **1027.**

The second lateral space variator **1025a,** in this aspect, is exemplarily shown as a flat and elongated member having a corresponding teeth profile that matches with the teeth profile of the second drive member **1027.** Other suitable profiles including cylindrical or round profiles can be suitably adapted for the second lateral space variator **1025a.**

In yet another aspect of the present invention, a laterally extendable or movable second lateral space variator **1025b** having a proximal and a distal end having a corresponding teeth profile and is movably engaged with the second drive member **1027,** through its proximal end, as shown in **FIG.10****.** The configuration of the second lateral space variator **1025b** can be rectangular, round or any other suitable configuration, preferably with a fine pitch. The second lateral space variator **1025b** can made of metal, plastic or of any suitable alloy materials. The second lateral space variator **1025b** is meshed with the teeth profile of the second drive member **1022.** In this arrangement the rotary movements of the second drive member **1022** is translated into linear movement of the second lateral space variator **1025b.**

The distal end of the second lateral space variator **1025b** is arranged to extend linearly and laterally from the second rotary gear **1027,** along the horizon *B*-*B*' and is integrally connected to the second movable image capturing member **1028b** through the slot **1029b.** The distal end of the second lateral space variator **1025b** is provided with a suitable profile so that the distal end can pass through the slot **1029b** and lock inside. The locking arrangement can be one of press-fit, screw, ratchet or any other suitable locking means.

The second lateral space variator **1025b,** which is meshed with the second drive member **1027** also moves linearly along its longitudinal axis. The linear movement of the second lateral space variator **1027b** is in the fore and aft directions, along the axis *B-B'*, consequent to the clock and counter-clockwise movements of the second rotary gear **1027.**

The second lateral space variator **1025b,** in this aspect, is exemplarily shown as a flat member having a corresponding teeth profile that matches with the teeth profile of the second drive member **1027.** Other suitable profiles including cylindrical or round profiles can be suitably adapted for the second lateral space variator **1025b.**

In this manner, an identical and reciprocal second lateral space variator **1025b** is arranged with its proximal end connected to the second rotary gear **1027** and its distal end connected to a second movable image capturing member **1028b** through the slot **1029b.** The arrangement of the second lateral space variators **1025a** and **1025b** are parallel and non-axial to each other and arranged to move in opposing directions.

In yet another aspect of the present invention the rotary movement of the second drive member **1027** causes lateral movement of the second lateral space variators **1025a** and **1025b** in linear and opposing directions. In other words, the rotation of the second drive member **1027** causes the extension or retraction of the second lateral space variators **1025a** and **1025b** away from or towards the housing **1001.** By altering the extension of the first and second lateral space variators, the interspatial distance between lens assemblies of the first and second image capturing members are varied and once the desired spatial distance is achieved the first and second set of movable image capturing members are adjusted to converge on the target object or subject 1008 at various converging angles and are locked to capture its left and right 3-D images of the target-subject **1008,** with enhanced depth angle.

The aforementioned movements of the first and second set of lateral space variators and movable image capturing members are regulated and controlled by the digital processor **1018** and executed through data and command channel **1019.**

By adopting the plurality of arrangement of the movable image capturing members **1007a, 1007b, 1028a, 1028b,** in parallel and diagonal positions in the housing **1001** of the device **1000,** not only the lateral displacement between the movable image capturing members is accomplished but also their vertical displacement. The number of movable image capturing members **1007a, 1007b, 1029a, 1029a** can also suitably increased should there be any such need.

In yet another aspect of the present invention, the movable image capturing members **1007a, 1007b, 1029a, 1029a,** preferably with wide angle lenses , can also be used to capturing panoramic images of the target-subject(s).

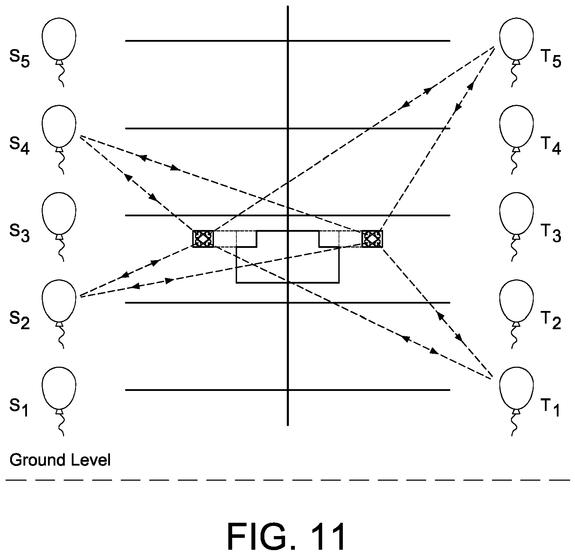

It is also an aspect of the present invention to use the multi-planar camera apparatus with movable image capturing members, to capture video images of a moving target-subject **T1**-**T5**, at various vertical levels, as shown in **FIG.11**, without tilting the body (housing) of the device. The apparatus can also be used to capture moving target-subject **S1-S5** present on the back side of the apparatus, without flipping or turning the camera backwards as shown in **FIG.11**. The multi-planar camera apparatus with movable image capturing members can capture video images of a moving target-subject **T1**-**T5**, at various vertical levels both from the front and back side of the apparatus, without resorting to turning the apparatus, since the image capturing members can rotate 360 degrees to capture the images. The embodiment of the present invention illustrates the "look up", "look down" and cyclotorsional or cyclorotational features of the movable image capturing members, in horizontal and vertical planes, while taking pictures in still mode and video mode.

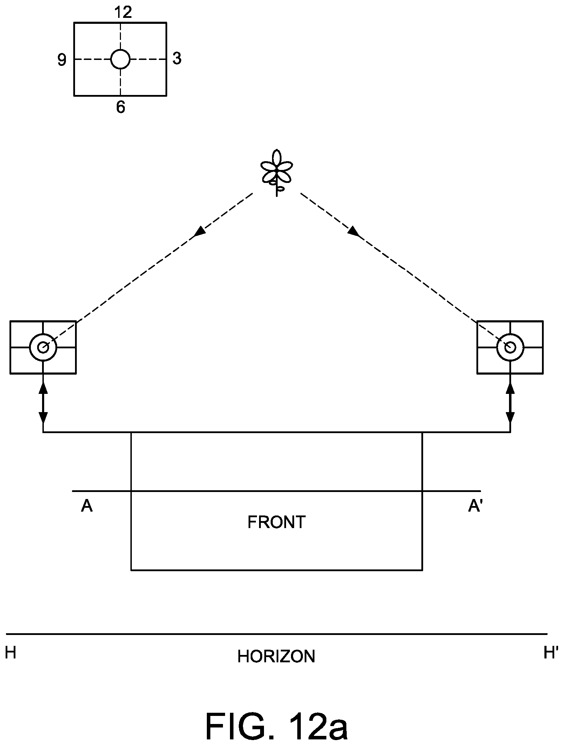

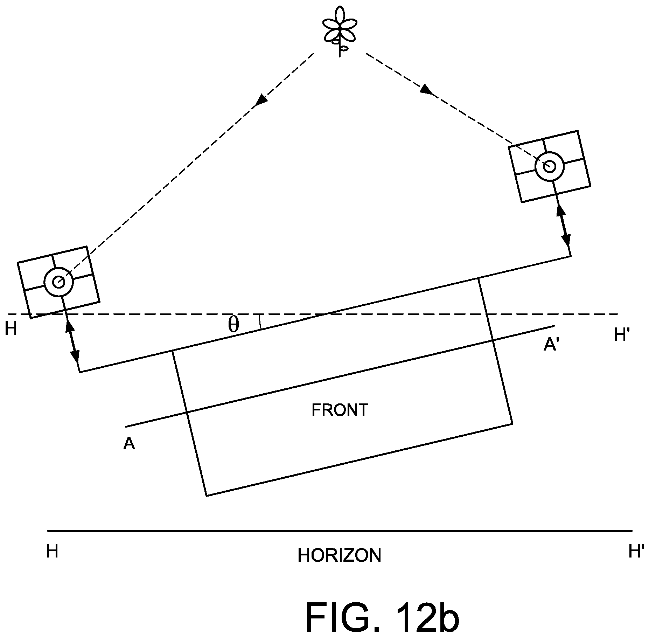

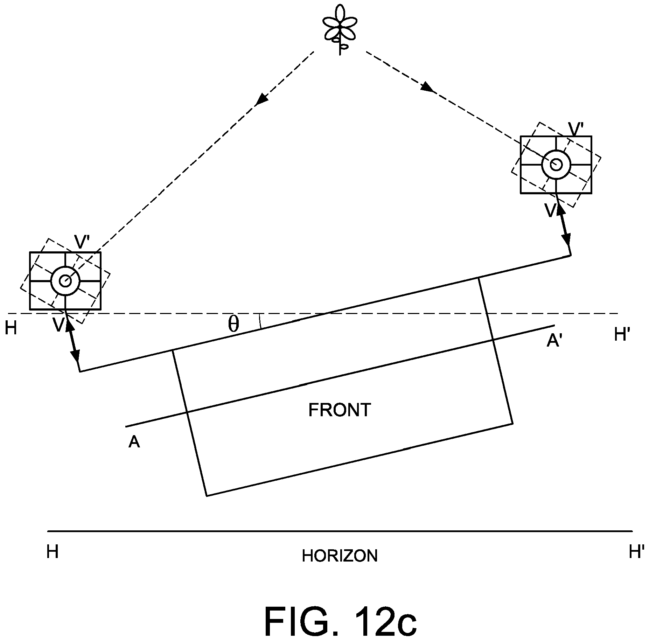

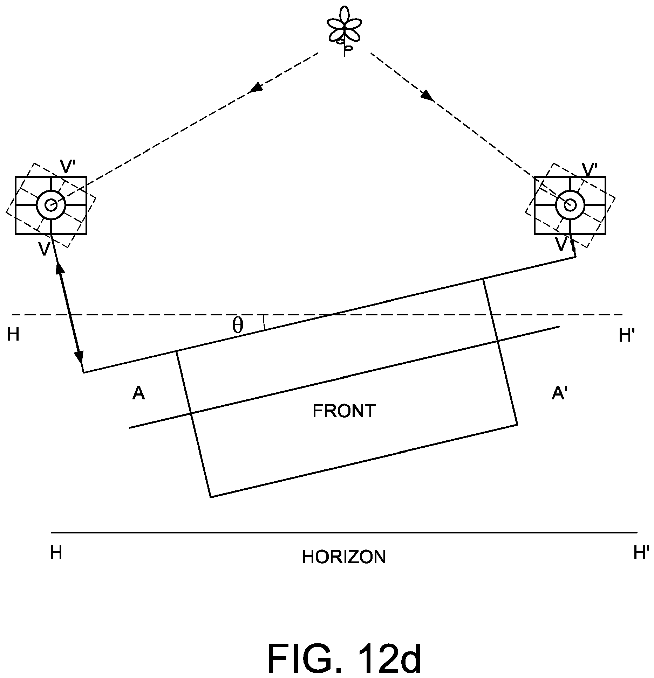

The cyclotorsional or cyclorotational aspects of the device of the present invention are further illustrated by referring to **FIG.12a****,** **12b****, and** **12c****.** Whenever, the device with the camera apparatus is operated, normally the axis "A-A' " is the initial axis of the movable image capturing members and they are at vertical meridian "V-V' " to the horizon, as shown in **FIG.12a****.** In other words, in this arrangement no tilt of the movable image capturing members is observed. However, when the body or housing of the camera apparatus is tilted the axis "*A-A*' "shifts with a tilting angle of θ, as shown in **FIG.12b****.** In this aspect, the tilt is exemplarily shown in counter-clockwise direction. In addition, the formation of the tilt angle θ, also results in the vertical displacement of left and right image capturing members, since the image capturing members are not parallel to the horizon "H-H"' as shown in **FIG.12c**. In other words, if an image is captured, in this position, by the image capturing members, the field of view will be vertically displaced and fusion of left and right views will be hampered. In order to offset the tilting of the image capturing members, the device of the present invention measures the tilt angle from the horizon level indicator through the digital processor and cyclorotates both left and right image capturing members in clockwise direction, to a desirable angle so as offset the angle θ and to bring the movable image capturing members back to an axis that is parallel to the horizon "H-H' " and to maintain the vertical meridian *"V-V'"*. Similarly, in case the tilt of the device occurs in clockwise direction the image capturing members will be directed to cyclorotate in counter-clockwise direction to offset the displaced angle θ. Once the tilting angle θ is compensated the length of the movable vertical stem of the image capturing members is suitably adjusted, by increasing on one side, where the downward tilt has occurred and decreasing the length of the vertical stem, where the upwards tilt has occurred, as shown in **FIG.12c****.** In this manner, not only the image capturing members are held parallel to the horizon "H-H' "even if the body of the device is not parallel and the left and right image capturing members are also held in the same level to enable capturing of left and right 3-D spatial images without hampering the fusion of left and right images.

The multi-planar camera apparatus with movable image capturing members of the present invention performs a cyclo-rotation function by which the movable image capturing members are always substantially at vertical meridians to the horizon, even when the device is tilted.

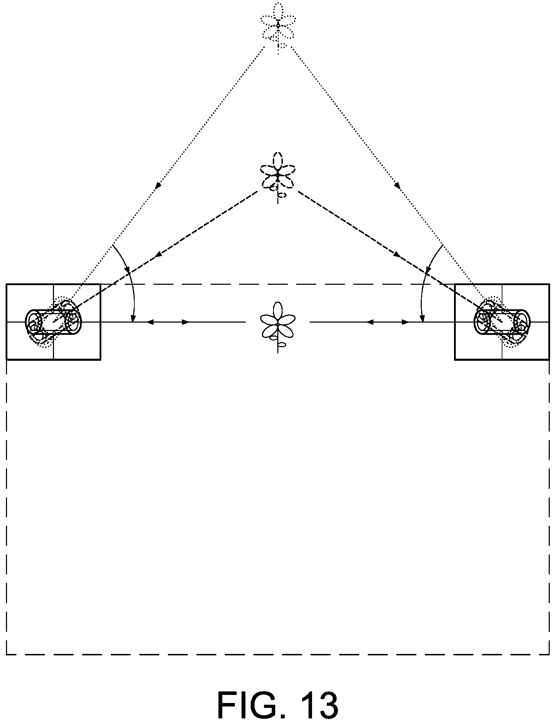

In further aspect of the present invention, as shown in **FIG.13****,** the obliteration of triangle of 3-D invisibility by using the device of the multi-planar apparatus of the invention is now described. The movable image capturing members which are configured to move, individually, 360 degrees, along the horizon A-A' and orient in desired multiple planes, to capture 3-D images of the target-subject positioned at various distances, which are farther and closer to the housing of the device as shown in **FIG.13****.** In other words, the left and right movable image capturing members that move away in a linear fashion in opposite directions and can also look back at each other, as shown in **FIG.13****,** to capture 3-D images of the target-subject that is positioned substantially closer to the device, thereby ensuring obliteration of triangle of 3-D invisibility and while retaining the multi-planar image capturing capability of the device.

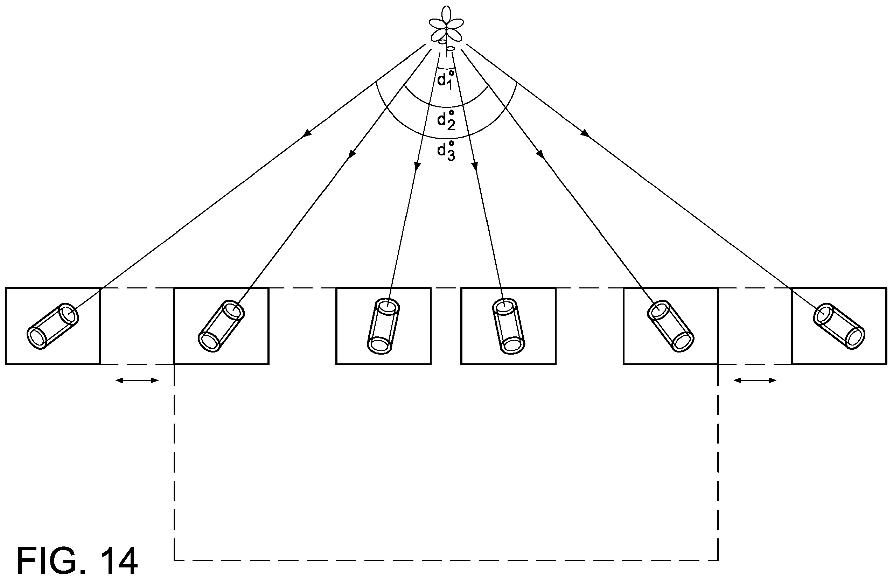

In yet another aspect of the present invention, as shown in **FIG.14****,** embodiments of the present invention, pertaining to alteration of depth angle of the target-subject, by using the multi-planar camera apparatus of the present invention, is disclosed. The variation or alteration of the depth angle by varying the lateral separation between the left and right movable image capturing members. For instance, as shown in **FIG.14****,** when the inter-spatial distance between the left and right movable image capturing members is small the corresponding depth angle that is obtained of the target-subject is also small (d1 degrees). The depth angles (d2 degrees and d3 degrees) get altered or enhanced when the movable image capturing members are further displaced laterally. Accordingly, by varying the inter-spatial distance between the left and right movable image capturing members the depth angles or 3-D angles of the target-subject can be suitably altered.

The subject matter of the present invention can be suitably adapted to any cameras, devices such as desktops, laptops, tablets, phablets and communication devices such as smart phones.

The broad functional aspects of the multi-planar camera apparatus of the device of the present invention are now described. A user handling the device of the present invention powers the device to actuate the installed automatic controls of the device, to perform routine initiator functions in conjunction with the digital processor. The user then selects a target-subject and the corresponding left and right images are viewed independently through the adjustable image viewing members having image-viewing screens through left and right eyes. Dissimilarity between the left and right images of the target-subject, when simultaneously perceived by the user's brain, results in the depth perception of the target-subject. However, as the user experiences the 3-D images of the target-subject through the eye piece complexes, the depth perception and the depth angle of the target-subject become limited, due to the minimal lateral displacement of the left and right image viewing members, which displacement correspond to an Inter-pupillary distance between the eyes of the user. In this context, it is understood that the term depth angle of the target-subject refers to an angle that is subtended by the target-subject to the left and right image viewing members, at the point of capturing of image of the target-subject.

The user in order to enhance the depth perception and depth angle of the focused target-subject actuates the actuator driving member of the device, which drives the lateral space variator assemblies to displace the movable left and right image capturing members, which are arranged in the camera receptacles, away from the housing in linear and opposite directions along the horizon *A-A'*. The displacement of the image capturing members varies the ICD between the left and right image capturing members and thereby increasing the distance between the left and right views of the user, beyond the normal IPD. The left and right image capturing members are, therefore, directed to move away from the housing of the device, to achieve a varying degree of depth angle, for a given fixed or movable target-subject, which is positioned at a distance from the device.

Now, one of the image capturing members is oriented in desired multiple planes, by driving the corresponding transverse actuator assemblies of the image capturing member, to perform look up, look down and roll movements operations, to target the various aspects (left or right aspects) of the target-subject, at alterable converging angles. These multi-planar vertical and roll movements of the image capturing members can be controlled by the user either through user controls incorporated in the device or automatically executed through software loaded and executed by the digital processor of the device.

Once the desired image capturing member is locked on to the target-subject, the autofocus mechanism of device, which is programed to recognize the target-subject, provides a complementary instruction to the other image capturing member, to perform a reciprocal function to lock itself on the target-subject. The digital processor is also programmed to monitor, track and execute instructions to orient each image capturing member on to the selected target-subject and to lock on it, by using vertical and horizontal orientations of the image capturing members and their cyclorotation. Once both the image capturing members lock on the target-subject, using the set of graticules as provided in the optics housing, the user performs actions to achieve the desired depth angle that is required of the target-subject and the user will now be in a position to view and experience three-dimensional (3-D) spatial images of the target-subject with an enhanced depth perception, either through the eye piece complexes directly or on the display unit of the device thorough polarized 3-D vision glasses.

The device also performs certain cyclo-rotation function by which the movable image capturing members are always substantially at vertical meridians to the horizon, cyclo rotate clockwise and counter clockwise directions, if the housing of the camera apparatus is tilted away from the horizon.

In the foregoing embodiment, the image capturing members are used to capture images that are positioned in front of the device. The device of the present invention having the movable image capturing members can capture 3-D images of a target-subject positioned on the back sides of the user, without even user turning backwards or shifting the device backwards.

The movable image capturing members can also be used to capture panoramic images of the target-subject by rotating the image capturing members horizontally along 360 degrees, without rotating the device (housing of the device).

The device of the present invention can also be used a surveillance camera to capture images at multiple planes and various converging angles.

Features of the present invention have been described with reference to the foregoing exemplary embodiments. However, the description is not intended to be construed in a limiting sense. Various modifications of the example embodiments, as well as other embodiments of the invention, which are apparent to persons skilled in the art to which the invention pertains are deemed to lie within the following claims.

## Claims

1. A multi-planar camera apparatus (200), comprising:
a) at least a pair of camera-receptacles (205a, 205b), disposed preferably at the terminal ends of an apparatus housing (201), along an axis *(A-A'),* **characterized in that**;
b) at least a pair of movable image capturing members (207a, 207b), with said or each pair disposed in said respective camera receptacles (205a, 205b), with an intervening distance, and said movable image capturing members (207a, 207b) are configured to orient in horizontal and vertical planes, cyclorotate and with vertical displacement compensation, to capture 3-D spatial images of at least a target-subject (208), at variable depth angles;
c) a pair of adjustable eye piece complexes (206a, 206b) with image-viewing screens (217a, 217b), mounted on said housing (201) and operably connected to said pair of movable image capturing members (207a, 207b), to render said captured 3-D spatial views of said target-subject (208) on said image-viewing screens (217a, 217b); and
d) a display unit (203) of said housing, operably connected to said movable image capturing members (207a, 207b), to display 3-D spatial images of said target-subject (208).

2. The camera apparatus (200) according to claim 1, comprising:
a) at least two pairs of camera receptacles (205a, 205b), disposed preferably at the terminal ends of said apparatus housing (201), along the axis *(A-A')* and a second axis (*B-B*)' respectively; and
b) at least two pairs of movable image capturing members (207a, 207b), disposed each in a respective camera-receptacle (205a, 205b) to capture 3-D spatial images of the at least one target-subject (208), which movable image capturing members (207a, 207b) are configured to orient in horizontal and vertical planes and cyclorotate cyclorotate and with vertical displacement compensation, to capture 3-D spatial images of at least a target-subject (208), at variable depth angles.

3. The camera apparatus (200) according to claim 1 or 2, wherein said movable image capturing members (207a, 207b) comprise:
a) a pitch-drive member (208a) operably connected to a movable pedestal (212a);
b) a yaw-drive member (209a) with a rotatable vertical stem (214a), operably connected to said movable pedestal, wherein the height of said rotatable vertical stem (214a) is variable;
c) a cyclorotate-drive member (210a) operably connected to said vertical stem; and
d) an optics housing (215a) operably connected to said vertical stem (214a).

4. The camera apparatus (200) according to claim 3, wherein a lens assembly (216a) is arranged within said optics housing (215a).

5. The camera apparatus (200) according to any of the preceding claims, wherein said movable image capturing members (207a, 207b) comprise a single drive member to perform pitch and yaw orientation, cyclorotate and vertical displacement compensation movements.

6. The camera apparatus (200) according to any of the preceding claims, wherein said movable image capturing members (207a, 207b) are configured to orient at 0-360 degrees along a horizontal plane and at about 120 degrees in a vertical plane, to obliterate 3-D triangle of invisibility between said image capturing members (207a, 207b).

7. The camera apparatus (200) according to any of the preceding claims, wherein said movable image capturing members (207a, 207b) are configured to cyclorotate in clockwise and counterclockwise directions.

8. The camera apparatus (300) according to any of the preceding claims, comprising at least a pair of lateral space variators (323a, 323b) disposed along said axis (*A-A'*) and operably connected to said movable image capturing members (307a, 307b), wherein said lateral space variators (323a, 323b) are configured to vary the interspatial distance between said movable image capturing members (307a, 307b).

9. The apparatus (1000) according to claims 2 and 8, comprising a plurality of lateral space variators (1023a, 1023b, 1025a, 1025b) disposed along axes (*A-A', B-B'*) and operably connected to said movable image capturing members (1007a, 1007b; 1028a, 1028b), wherein said lateral space variators 1023a, 1023b, 1025a, 1025b) are configured to vary the interspatial distance between said movable image capturing members (1007a, 1007b; 1028a, 1028b).

10. The camera apparatus (300) according claim 8, wherein said lateral space variators (323a, 323b) are disposed to extend or contract said movable image capturing members (307a, 307b) along said axis (*A-A'*).

11. The camera apparatus (1000) according claim 9, wherein said plurality of lateral space variators (1023a, 1023b, 1025a, 1025b) are disposed to extend or contract said movable image capturing members (1007a, 1007b, 1028a, 1028b), along said axes (*A-A', B-B'*)*.*

12. The apparatus (300) according to any of claims 8 to 11, wherein said lateral space variators (323a, 323b) comprise laterally-movable linear gears, operably connected to a rotary drive member (322) and to an actuator driving member (320).

13. The camera apparatus (400) according to any of claims 8 to 11, wherein said lateral space variators (424a, 424b) comprise laterally-movable linear stems, operably connected to a rotatable disc member (422) and to an actuator driving member (420).

14. The camera apparatus (500) according to any of claims 8 to 11, wherein said lateral space variators (524a, 524b) comprise laterally-movable linear stems, operably connected to a cylinder (521a, 521b) and movable piston (523a, 523b) and to an actuator driving member (520).

15. The camera apparatus (600) according to any of claims 8 to 11, wherein said lateral space variators (617a, 617b) comprise laterally-movable magnetic stems, operably connected to a core (621a, 621b) having coil windings (622a, 622b) with movable magnets (624a, 624b) and to an actuator driving member (620).

16. The camera apparatus (700) according to any of claims 8 to 11, wherein said lateral space variators (721a, 721b) comprise laterally-movable threaded stems, operably connected to nuts (722a, 722b) and lateral space variator screws and to an actuator driving member (720).

17. The camera apparatus (800) according to any of the preceding claims, wherein said lateral space variators (824a, 824b) and/or said movable image capturing members (807a, 807b) are non-integrally connected to said housing (801), through an adaptor.

18. The camera apparatus (200) according to claim 2, comprising means for allowing an independent selection of a desired individual pair of said movable image capturing members (207a, 207b, 207c, 207d), to capture the 3-D images of the target-subject (208).

## Patentansprüche

1. Multiplanare Kameravorrichtung (200), die umfasst:
a) mindestens ein Paar Kameraaufnahmen (205a, 205b), die vorzugsweise entlang einer Achse (A-A') an den abschließenden Enden eines Gehäuses (201) der Vorrichtung angeordnet sind, **gekennzeichnet durch**
b) mindestens ein Paar beweglicher Bildaufnahmeelemente (207a, 207b), wobei das beziehungsweise jedes Paar mit einem dazwischen liegenden Abstand in den jeweiligen Kameraaufnahmen (205a, 205b) angeordnet ist und die beweglichen Bildaufnahmeelemente (207a, 207b) so konfiguriert sind, dass sie sich zur Aufnahme räumlicher 3-D-Bilder mindestens eines Zielsubjekts (208) in veränderlichen Tiefenwinkeln in horizontalen und vertikalen Ebenen ausrichten, zyklorotieren und eine vertikale Versatzkompensation aufweisen;
c) ein Paar einstellbarer Okularkomplexe (206a, 206b) mit Bildbetrachtungsschirmen (217a, 217b), die an dem Gehäuse (201) montiert und zur Wiedergabe der aufgenommenen räumlichen 3-D-Ansichten des Zielsubjekts (208) auf den Bildbetrachtungsschirmen (217a, 217b) operativ mit dem Paar beweglicher Bildaufnahmeelemente (207a, 207b) verbunden sind; und
d) eine Anzeigeeinheit (203) des Gehäuses, die zur Anzeige räumlicher 3-D-Bilder des Zielsubjekts (208) operativ mit den beweglichen Bildaufnahmeelementen (207a, 207b) verbunden ist.

2. Kameravorrichtung (200) nach Anspruch 1, die umfasst:
a) mindestens zwei Paar Kameraaufnahmen (205a, 205b), die vorzugsweise jeweils entlang der Achse (A-A') und einer zweiten Achse (B-B') an den abschließenden Enden des Gehäuses (201) der Vorrichtung angeordnet sind; und
b) mindestens zwei Paar bewegliche Bildaufnahmeelemente (207a, 207b), die zur Aufnahme räumlicher 3-D-Bilder mindestens eines Zielsubjekts (208) jeweils in einer jeweiligen Kameraaufnahme (205a, 205b) angeordnet sind, wobei die beweglichen Bildaufnahmeelemente (207a, 207b) so konfiguriert sind, dass sie sich zur Aufnahme räumlicher 3-D-Bilder mindestens eines Zielsubjekts (208) in veränderlichen Tiefenwinkeln in horizontalen und vertikalen Ebenen ausrichten, zyklorotieren und eine vertikale Versatzkompensation aufweisen.

3. Kameravorrichtung (200) nach Anspruch 1 oder 2, wobei die beweglichen Bildaufnahmeelemente (207a, 207b) umfassen:
a) ein Neigungsantriebselement (208a), das operativ mit einem beweglichen Standfuß (212a) verbunden ist;
b) ein Gierantriebselement (209a) mit einem drehbaren vertikalen Schaft (214a), der operativ mit dem beweglichen Standfuß (212a) verbunden ist, wobei die Höhe des drehbaren vertikalen Schafts (214a) veränderlich ist;
c) ein Zyklorotationsantriebselement (210a), das operativ mit dem vertikalen Schaft (214a) verbunden ist;
d) ein Optikgehäuse (215a), das operativ mit dem vertikalen Schaft (214a) verbunden ist.

4. Kameravorrichtung (200) nach Anspruch 3, wobei eine Linsenbaugruppe (216a) in dem Optikgehäuse (215a) angeordnet ist.

5. Kameravorrichtung (200) nach einem der vorhergehenden Ansprüche, wobei die beweglichen Bildaufnahmeelemente (207a, 207b) ein einziges Antriebselement zum Ausführen von Neigungs- und Gierausrichtungs-, Zyklorotations- und vertikalen Versatzkompensationsbewegungen umfassen.

6. Kameravorrichtung (200) nach einem der vorhergehenden Ansprüche, wobei die beweglichen Bildaufnahmeelemente (207a, 207b) so konfiguriert sind, dass sie sich zum Ausschließen eines dreidimensionalen blinden Dreiecks zwischen den Bildaufnahmeelementen (207a, 207b) in einer horizontalen Ebene um 0 bis 360 Grad und in einer vertikalen Ebene um ca. 120 Grad ausrichten.

7. Kameravorrichtung (200) nach einem der vorhergehenden Ansprüche, wobei die beweglichen Bildaufnahmeelemente (207a, 207b) so konfiguriert sind, dass sie im Uhrzeigersinn und im Gegenuhrzeigersinn zyklorotieren.

8. Kameravorrichtung (300) nach einem der vorhergehenden Ansprüche, die mindestens ein Paar seitliche Raumvariatoren (323a, 323b) umfasst, die entlang der Achse (A-A') angeordnet und operativ mit den beweglichen Bildaufnahmeelementen (307a, 307b) verbunden sind, wobei die seitlichen Raumvariatoren (323a, 323b) so konfiguriert sind, dass sie den räumlichen Abstand zwischen den beweglichen Bildaufnahmeelementen (307a, 307b) verändern.

9. Vorrichtung (1000) nach den Ansprüchen 2 und 8, die mehrere seitliche Raumvariatoren (1023a, 1023b, 1025a, 1025b) umfasst, die entlang Achsen (A-A', B-B') angeordnet und operativ mit den beweglichen Bildaufnahmeelementen (1007a, 1007b, 1028a, 1028b) verbunden sind, wobei die seitlichen Raumvariatoren (1023a, 1023b, 1025a, 1025b) so konfiguriert sind, dass sie den räumlichen Abstand zwischen den beweglichen Bildaufnahmeelementen (1007a, 1007b, 1028a, 1028b) verändern.

10. Kameravorrichtung (300) nach Anspruch 8, wobei die seitlichen Raumvariatoren (323a, 323b) so angeordnet sind, dass sie die beweglichen Bildaufnahmeelemente (307a, 307b) entlang der Achse (A-A') ausfahren oder einziehen.

11. Kameravorrichtung (1000) nach Anspruch 9, wobei die mehreren seitlichen Raumvariatoren (1023a, 1023b, 1025a, 1025b) so angeordnet sind, dass sie die beweglichen Bildaufnahmeelemente (1007a, 1007b, 1028a, 1028b) entlang der Achsen (A-A', B-B') ausfahren oder einziehen.

12. Vorrichtung (300) nach einem der Ansprüche 8 bis 11, wobei die seitlichen Raumvariatoren (323a, 323b) seitlich bewegliche lineare Zahnräder umfassen, die operativ mit einem Drehantriebselement (322) und einem Stellgliedantriebselement (320) verbunden sind.

13. Kameravorrichtung (400) nach einem der Ansprüche 8 bis 11, wobei die seitlichen Raumvariatoren (423a, 423b) seitlich bewegliche, lineare Schäfte umfassen, die operativ mit einem drehbaren Plattenelement (422) und einem Stellgliedantriebselement (420) verbunden sind.

14. Kameravorrichtung (500) nach einem der Ansprüche 8 bis 11, wobei die seitlichen Raumvariatoren (524a, 524b) seitlich bewegliche, lineare Schäfte umfassen, die operativ mit einem Zylinder (521a, 521b) und einem beweglichen Kolben (523a, 523b) und einem Stellgliedantriebselement (520) verbunden sind.

15. Kameravorrichtung (600) nach einem der Ansprüche 8 bis 11, wobei die seitlichen Raumvariatoren (617a, 617b) seitlich bewegliche, magnetische Schäfte umfassen, die operativ mit einem Kern (621a, 621b), der Spulenwicklungen (622a, 622b) mit beweglichen Magneten (624a, 624b) aufweist, und einem Stellgliedantriebselement (520) verbunden sind.

16. Kameravorrichtung (700) nach einem der Ansprüche 8 bis 11, wobei die seitlichen Raumvariatoren (721a, 721b) seitlich bewegliche Schäfte mit Gewinde umfassen, die operativ mit Muttern (722a, 722b) und seitlichen Raumvariatorschrauben und mit einem Stellgliedantriebselement (720) verbunden sind.

17. Kameravorrichtung (800) nach einem der vorhergehenden Ansprüche, wobei die seitlichen Raumvariatoren (824a, 824b) und/oder die beweglichen Bildaufnahmeelemente (807a, 807b) über einen Adapter nicht einstückig mit dem Gehäuse (801) verbunden sind.

18. Kameravorrichtung (200) nach Anspruch 2, die eine Einrichtung zum Ermöglichen einer unabhängigen Auswahl eines gewünschten einzelnen Paars der beweglichen Bildaufnahmeelemente (207a, 207b, 207c, 207d) zur Aufnahme der 3-D-Bilder von dem Zielsubjekt (208) umfasst.

## Revendications

1. Appareil de caméra à plans multiples (200), comprenant :
a) au moins une paire de réceptacles de caméra (205a, 205b), disposés, de préférence, aux extrémités terminales d'un logement d'appareil (201), le long d'un axe (A-A'), **caractérisé en ce que** :
b) au moins une paire d'éléments de capture d'image mobiles (207a, 207b), ladite paire ou chaque paire étant disposée dans lesdits réceptacles de caméra (205a, 205b) respectifs, avec une distance entre eux, et lesdits éléments de capture d'image mobiles (207a, 207b) sont configurés pour s'orienter dans les plans horizontal et vertical, effectuer une cyclorotation et avec une compensation de déplacement vertical, pour capturer des images spatiales 3D d'au moins un sujet cible (208), avec des angles de profondeur variables ;
c) une paire d'ensembles d'oculaires ajustables (206a, 206b) avec des écrans d'affichage d'image (217a, 217b), montés sur ledit logement (201) et connectés de manière fonctionnelle à ladite paire d'éléments de capture d'image mobiles (207a, 207b), pour reproduire lesdites vues spatiales 3D capturées dudit sujet cible (208) sur lesdits écrans d'affichage d'image (217a, 217b) ; et
d) une unité d'affichage (203) dudit logement, connectée de manière fonctionnelle auxdits éléments de capture d'image mobiles (207a, 207b), pour afficher les images spatiales 3D dudit sujet cible (208).

2. Appareil de caméra (200) selon la revendication 1, comprenant :
a) au moins deux paires de réceptacles de caméra (205a, 205b), disposées, de préférence, aux extrémités terminales dudit logement d'appareil (201), le long de l'axe (A-A') et d'un deuxième axe (B-B') respectivement ; et
b) au moins deux paires d'éléments de capture d'image mobiles (207a, 207b), disposées chacune dans un réceptacle de caméra (205a, 205b) respectif pour capturer des images spatiales 3D dudit au moins un sujet cible (208), lesquels éléments de capture d'image mobiles (207a, 207b) sont configurés pour s'orienter dans les plans horizontal et vertical, et effectuer une cyclorotation, et avec une compensation de déplacement vertical, pour capturer des images spatiales 3D d'au moins un sujet cible (208), avec des angles de profondeur variables.

3. Appareil de caméra (200) selon la revendication 1 ou 2, dans lequel lesdits éléments de capture d'image mobiles (207a, 207b) comprennent :
a) un élément d'entraînement en tangage (208a) relié de manière fonctionnelle à un socle mobile (212a) ;
b) un élément d'entraînement en lacet (209a) avec une tige verticale rotative (214a), relié de manière fonctionnelle audit socle mobile, dans lequel la hauteur de ladite tige verticale rotative (214a) est variable ;
c) un élément d'entraînement en cyclorotation (210a) relié de manière fonctionnelle à ladite tige verticale ; et
d) un logement d'optique (215a) relié de manière fonctionnelle à ladite tige verticale (214a).

4. Appareil de caméra (200) selon la revendication 3, dans lequel un ensemble d'objectif (216a) est agencé dans ledit logement d'optique (215a).

5. Appareil de caméra (200) selon l'une quelconque des revendications précédentes, dans lequel lesdits éléments de capture d'image mobiles (207a, 207b) comprennent un seul élément d'entraînement pour effectuer les mouvements d'orientation en tangage et en lacet, de cyclorotation et de compensation de déplacement vertical.

6. Appareil de caméra (200) selon l'une quelconque des revendications précédentes, dans lequel lesdits éléments de capture d'image mobiles (207a, 207b) sont configurés pour s'orienter à 0 à 360 degrés le long d'un plan horizontal et à environ 120 degrés dans un plan vertical, pour oblitérer un triangle 3D d'invisibilité entre lesdits éléments de capture d'image (207a,207b).

7. Appareil de caméra (200) selon l'une quelconque des revendications précédentes, dans lequel lesdits éléments de capture d'image mobiles (207a, 207b) sont configurés pour effectuer une cyclorotation dans le sens des aiguilles d'une montre et dans le sens inverse des aiguilles d'une montre.

8. Appareil de caméra (300) selon l'une quelconque des revendications précédentes, comprenant au moins une paire de variateurs d'espace latéral (323a, 323b) disposés le long dudit axe (A-A') et reliés de manière fonctionnelle auxdits éléments de capture d'image mobiles (307a, 307b), dans lequel lesdits variateurs d'espace latéral (323a, 323b) sont configurés pour modifier la distance interspatiale entre lesdits éléments de capture d'image mobiles (307a, 307b).

9. Appareil (1000) selon les revendications 2 et 8, comprenant une pluralité de variateurs d'espace latéral (1023a, 1023b, 1025a, 1025b) disposés le long des axes (A-A', B-B') et reliés de manière fonctionnelle auxdits éléments de capture d'image mobiles (1007a, 1007b ; 1028a, 1028b), dans lequel lesdits variateurs d'espace latéral (1023a, 1023b, 1025a, 1025b) sont configurés pour modifier la distance interspatiale entre lesdits éléments de capture d'image mobiles (1007a, 1007b ; 1028a, 1028b).

10. Appareil de caméra (300) selon la revendication 8, dans lequel lesdits variateurs d'espace latéral (323a, 323b) sont disposés de manière à étendre ou à rétracter lesdits éléments de capture d'image mobiles (307a, 307b) le long dudit axe (A-A').

11. Appareil de caméra (1000) selon la revendication 9, dans lequel ladite pluralité de variateurs d'espace latéral (1023a, 1023b, 1025a, 1025b) sont disposés de manière à étendre ou à rétracter lesdits éléments de capture d'image mobiles (1007a, 1007b ; 1028a, 1028b), le long desdits axes (A-A', B-B').

12. Appareil (300) selon l'une quelconque des revendications 8 à 11, dans lequel lesdits variateurs d'espace latéral (323a, 323b) comprennent des pignons linéaires mobiles latéralement, reliés de manière fonctionnelle à un élément d'entraînement rotatif (322) et à un élément d'entraînement d'actionneur (320).

13. Appareil de caméra (400) selon l'une quelconque des revendications 8 à 11, dans lequel lesdits variateurs d'espace latéral (424a, 424b) comprennent des tiges linéaires mobiles latéralement, reliées de manière fonctionnelle à un élément de disque rotatif (422) et à un élément d'entraînement d'actionneur (420).

14. Appareil de caméra (500) selon l'une quelconque des revendications 8 à 11, dans lequel lesdits variateurs d'espace latéral (524a, 524b) comprennent des tiges linéaires mobiles latéralement, reliées de manière fonctionnelle à un cylindre (521a, 521b) et un piston mobile (523a, 523b) et à un élément d'entraînement d'actionneur (520).

15. Appareil de caméra (600) selon l'une quelconque des revendications 8 à 11, dans lequel lesdits variateurs d'espace latéral (617a, 617b) comprennent des tiges magnétiques mobiles latéralement, reliées de manière fonctionnelle à un noyau (621a, 621b) comportant des enroulements de bobine (622a, 622b) avec des aimants mobiles (624a, 624b) et à un élément d'entraînement d'actionneur (620).

16. Appareil de caméra (700) selon l'une quelconque des revendications 8 à 11, dans lequel lesdits variateurs d'espace latéral (721a, 721b) comprennent des tiges filetées mobiles latéralement, reliées de manière fonctionnelle à des écrous (722a, 722b) et des vis de variateur d'espace latéral et à un élément d'entraînement d'actionneur (720).

17. Appareil de caméra (800) selon l'une quelconque des revendications précédentes, dans lequel lesdits variateurs d'espace latéral (824a, 824b) et/ou lesdits éléments de capture d'image mobiles (807a, 807b) sont reliés de manière non intégrale audit logement (801), par l'intermédiaire d'un adaptateur.

18. Appareil de caméra (200) selon la revendication 2, comprenant des moyens pour permettre une sélection indépendante d'une paire individuelle souhaitée desdits éléments de capture d'image mobiles (207a, 207b, 207c, 207d), pour capturer les images 3D du sujet cible (208).
